(19) Europäisches Patentamt / European Patent Office / Office européen des brevets

(11) **EP 3 787 822 B1**

(12) **FASCICULE DE BREVET EUROPEEN**

(45) Date de publication et mention de la délivrance du brevet:
**11.10.2023 Bulletin 2023/41**

(21) Numéro de dépôt: **19728473.0**

(22) Date de dépôt: **03.05.2019**

(51) Classification Internationale des Brevets (IPC):
**B22F 1/065** (2022.01)    **B22F 1/07** (2022.01)
**C22C 1/059** (2023.01)    **C22C 33/02** (2006.01)
**C22C 32/00** (2006.01)    **C22C 1/04** (2023.01)
**C22C 1/10** (2023.01)    **B22F 10/14** (2021.01)
**B22F 10/28** (2021.01)    **B22F 10/34** (2021.01)
**C22C 19/05** (2006.01)    **C22C 21/02** (2006.01)
**C22C 21/06** (2006.01)    **C22C 38/02** (2006.01)
**C22C 38/04** (2006.01)    **C22C 38/18** (2006.01)
**C22C 38/44** (2006.01)    **B22F 9/14** (2006.01)

(52) Classification Coopérative des Brevets (CPC):
(C-Sets disponibles)
**C22C 32/0026; B22F 1/065; B22F 1/07; B22F 9/14;
B22F 10/14; B22F 10/28; B22F 10/34;
C22C 1/0416; C22C 1/0433; C22C 1/059;
C22C 1/1078; C22C 1/1084; C22C 19/05;
C22C 19/052; C22C 19/053;** (Cont.)

(86) Numéro de dépôt international:
**PCT/FR2019/000067**

(87) Numéro de publication internationale:
**WO 2019/211534 (07.11.2019 Gazette 2019/45)**

(54) **POUDRE D'ALLIAGE ODS, SON PROCÉDÉ DE FABRICATION PAR TRAITEMENT PLASMA, ET SON UTILISATION**

ODS-LEGIERUNGSPULVER, VERFAHREN ZU SEINER HERSTELLUNG MITTELS PLASMABEHANDLUNG UND DESSEN VERWENDUNG

ODS ALLOY POWDER, METHOD FOR PRODUCING SAME BY MEANS OF PLASMA TREATMENT, AND USE THEREOF

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.05.2018 FR 1853836**

(43) Date de publication de la demande:
**10.03.2021 Bulletin 2021/10**

(73) Titulaire: **Commissariat à l'Energie Atomique et aux Energies Alternatives
75015 Paris (FR)**

(72) Inventeurs:
• **VASQUEZ, Elodie**
  **92120 Montrouge (FR)**
• **GIROUX, Pierre-François**
  **92290 Châtenay-Malabry (FR)**
• **LOMELLO, Fernando**
  **91190 Gif-sur-Yvette (FR)**
• **MASKROT, Hicham**
  **91310 Montlhery (FR)**
• **LECONTE, Yann**
  **78470 Saint Remy les Chevreuse (FR)**
• **SCHUSTER, Frédéric**
  **78100 St Germain-En-Laye (FR)**
• **ABDELKEBIR, Khalil**
  **45590 Saint-Cyr-En-Val (FR)**

(74) Mandataire: **Cabinet Nony**
**11 rue Saint-Georges**
**75009 Paris (FR)**

(56) Documents cités:
WO-A1-86/06366    CN-A- 102 251 131
CN-A- 103 060 591    CN-A- 107 760 933
US-A- 4 689 075    US-A- 4 755 221
US-A1- 2011 103 961    US-A1- 2015 093 279

- **LONGZHOU MA ET AL: "Characterization of Oxide-Dispersion-Strengthened (ODS) Alloy Powders Processed by Mechano-Chemical-Bonding (MCB) and Balling Milling (BM)", KONA., vol. 31, no. 0, 1 janvier 2014 (2014-01-01), pages 146-155, XP055570738, JP ISSN: 0288-4534, DOI: 10.14356/kona.2014004**
- **HE PEI ET AL: "An in situ SANS study of nanoparticles formation in 9Cr ODS steel powders", MATERIALS LETTERS, vol. 209, 15 août 2017 (2017-08-15), pages 535-538, XP085204904, ISSN: 0167-577X, DOI: 10.1016/J.MATLET.2017.08.051**
- **Oesterle: "Mikrostruktur eines ODS-Pulvers auf Nikkelbasis nach dem mechanischen Legieren", ZEITSCHRIFT FUR METALLKUNDE, 1 février 1993 (1993-02-01), page 85, XP055570731, Extrait de l'Internet: URL:https://www.tib.eu/en/search/id/BLSE%3AEN004127821/Mikrostruktur-eines-ODS-Pulvers-auf-Nikkelbasis/ [extrait le 2019-03-18]**

(52) Classification Coopérative des Brevets (CPC):
(Cont.)
**C22C 19/055; C22C 19/056; C22C 21/02;**
**C22C 21/06; C22C 32/0036; C22C 33/0261;**
**C22C 38/02; C22C 38/04; C22C 38/18;**
**C22C 38/44; B22F 2998/10; B22F 2999/00;**
Y02P 10/25

C-Sets
B22F 2998/10, C22C 1/1084, B22F 9/14;
B22F 2999/00, B22F 9/14, B22F 2202/13

**Description**

**DOMAINE TECHNIQUE**

La présente invention appartient au domaine des alliages renforcés par dispersion d'oxydes (dit alliage « ODS » selon l'acronyme anglais pour « *Oxyde Dispersion Strengthened* »), les oxydes constituant des renforts de la matrice métallique dans laquelle ils sont dispersés.

L'invention concerne plus particulièrement une poudre d'un alliage ODS, ainsi que son procédé de fabrication.

**ARRIERE-PLAN TECHNIQUE**

L'atomisation est le procédé le plus courant pour fabriquer une poudre métallique. Il consiste à pulvériser en fines gouttelettes un filet de métal en fusion exposé à un jet de gaz ou à un jet d'eau à haute pression afin d'obtenir la poudre.

Toutefois, l'atomisation n'est pas adaptée à la fabrication d'une poudre d'alliage ODS : il est souvent impossible de disposer de la matière première indispensable à l'atomisation qui est un métal de base sous forme massive (telle que par exemple sous forme de lingot) qui contiendrait en outre des renforts d'oxydes qui y sont dispersés de manière plus ou moins homogène.

En effet, les renforts d'oxydes ne fondent pas à la même température que le métal de base. Ils s'agglomèrent alors à cause de problèmes de mouillabilité des renforts dans le métal de base en fusion et de différences de densité entre renforts et métal. En pratique, les procédés de fonderie ne sont donc pas utilisés pour former des alliages ODS.

Pour former des alliages ODS, le procédé de fabrication par mécanosynthèse est à ce jour privilégié. Ce procédé de métallurgie des poudres est décrit par exemple dans le document de « C. Suryanarayana "Mechanical alloying and milling", Progress in Materials Science, 2001, 46, 1-184 » [référence 1]. Il repose sur le co-broyage à haute énergie d'une première poudre du métal de base (éventuellement pré-alliée) préalablement obtenue par atomisation et destinée à former la matrice métallique avec au moins une deuxième poudre métallique destinée à former un renfort d'oxydes dans la matrice métallique. Au cours du broyage, tout ou partie des atomes constitutifs de la deuxième poudre métallique s'incorporent dans la matrice métallique, éventuellement et le plus probablement sous forme de solution solide.

Toutefois, à ce stade du procédé de mécanosynthèse, les oxydes ne sont pas formés (à tout le mieux une partie des oxydes peut être sous la forme d'oxydes amorphes, à savoir non cristallisés : un débat existe néanmoins au sein de la communauté scientifique pour savoir si ces oxydes non cristallisés ne correspondent pas en partie aux atomes constitutifs correspondants qui seraient en solution solide dans la matrice métallique) et les renforts correspondants n'ont pas germé au sein des particules de poudres broyées. Seule une étape supplémentaire de consolidation (par exemple par filage à chaud ou compression isostatique à chaud) fait croître les renforts d'oxydes au sein de la matrice métallique afin d'obtenir définitivement un alliage ODS.

Ce n'est qu'après la formation de particules d'oxyde qui constituent autant de renforts dispersés dans la matrice métallique qu'un vrai alliage renforcé est formé, et donc que l'appellation « alliage ODS » est pleinement justifiée.

Or, il est difficile de maîtriser la formation de la poudre d'alliage ODS ainsi obtenue, notamment sa composition, sa taille, sa morphologie et la répartition des renforts d'oxydes au sein de la matrice métallique.

CN 102 251 131 A décrit un procédé pour préparer un alliage durci par dispersion d'oxydes à base nickel, qui est utile à la compréhension de l'invention.

L'article de Pei He et al., An in situ SANS study of nanoparticles formation in 9Cr ODS steel powders, Materials Letters 209 (2017) 535-538, décrit également une poudre durci par dispersion d'oxydes.

**EXPOSE DE L'INVENTION**

Un des buts de l'invention est donc d'éviter ou d'atténuer un ou plusieurs des inconvénients décrits ci-dessus, en proposant un nouveau procédé de fabrication d'une poudre d'alliage ODS, présentant plus particulièrement des caractéristiques de composition et/ou microstructure qui sont optimisées.

La présente invention concerne ainsi un procédé de fabrication d'une poudre d'un alliage renforcé selon la revendication 1.

Selon le procédé de fabrication de l'invention, la combinaison d'une étape de broyage par mécanosynthèse et d'une étape de traitement plasma produit une poudre d'alliage ODS comprenant des particules d'oxyde cristallisées en tant que renforts de la matrice métallique.

Un tel résultat est inattendu pour l'homme du métier pour les raisons suivantes :

- le traitement d'une poudre par plasma thermique provoque typiquement la fusion de cette poudre. Un plasma thermique (dit également « plasma chaud ») est un plasma très énergétique dans lequel les électrons et les ions influencent le comportement du plasma. Un plasma thermique est en opposition à un plasma froid qui est moins énergétique et dans lequel seuls les électrons influencent le comportement du plasma.

Or, comme indiqué précédemment, un procédé de fusion n'est absolument pas recommandé pour former un alliage ODS, raison pour laquelle la mécanosynthèse a été développée, comme l'indique l'article passant en revue l'état de l'art « DJ Lloyd ; « Particle reinforced aluminium and magnesium matrix composites » ; International materials reviews, 1994, vol. 39, n° 1, pages 1 à 23. » [référence 2].

C'est aussi pour cette raison que l'on évite généralement d'utiliser une compaction isostatique à chaud à trop haute température.

En effet, les particules d'oxyde fondent généralement à une température supérieure à celle de l'alliage maître destiné à former la matrice métallique. Elles ont donc tendance à s'agglomérer à cause de leur faible mouillabilité dans le métal en fusion et de leur densité différente de celle du métal. Dans de telles conditions, il est dès lors impossible d'obtenir un alliage renforcé avec des renforts d'oxydes dispersés dans la matrice métallique de manière relativement homogène, en particulier des renforts d'une taille nanométrique.

- après la mécanosynthèse, les atomes destinés à former les particules d'oxyde sont répartis dans la matrice métallique, éventuellement et le plus probablement sous forme d'une solution solide, même si un débat existe à ce sujet au sein de la communauté scientifique. Ce n'est que lors de l'étape ultérieure de consolidation que les particules d'oxyde vont germer puis cristalliser. Or, cette étape de consolidation telle qu'elle est effectuée dans l'état de la technique n'est pas favorable au contrôle des caractéristiques des renforts obtenus ; notamment leur taille, leur morphologie, leur degré de cristallisation et/ou leur répartition dans la matrice métallique.
- les torches plasma sont prévues pour traiter et obtenir une poudre dont les particules sont de taille micrométrique. Pour obtenir une nanopoudre, à savoir une poudre dont les particules sont de taille nanométrique, la torche plasma doit intégrer un anneau de trempe. Les procédés de traitement par torche plasma sont très énergétiques et sans équipement supplémentaire type anneau de trempe, l'homme du métier s'attend à ce qu'un traitement par torche plasma ne forme pas une nanopoudre, ainsi que des nanoprécipités au sein d'une particule de poudre car - les précipités s'y aggloméreraient.

Or, à l'encontre du préjugé selon lequel l'utilisation d'une étape de traitement plasma au cours duquel les poudres sont en fusion ne permettrait pas d'obtenir une poudre d'alliage ODS aux caractéristiques optimisées, les inventeurs ont montré que les particules d'oxyde ne coalescent pas au cours de l'étape de traitement plasma.

Au contraire, elles restent individualisées au cours de leur précipitation selon deux étapes :

i) la germination au cours de laquelle les atomes métalliques migrent dans la matrice métallique et se rencontrent pour former des molécules d'oxyde au sein même des particules de poudres, puis
ii) la cristallisation comprenant la croissance de cristaux d'oxyde pour former les particules d'oxyde.

Parallèlement, toujours au cours de l'étape de traitement plasma, l'alliage maître cristallise généralement en masse en tout ou partie pour former la matrice métallique. Les renforts cristallisés d'oxyde ainsi formés sont dispersés de manière homogène dans la matrice métallique cristallisée en tout ou partie.

Avantageusement, le procédé de fabrication de l'invention permet dès lors de fabriquer un alliage ODS avec un très bon contrôle de la taille et de la dispersion des précipités d'oxyde renforçant la matrice métallique de l'alliage ODS.

Au cours de la première étape du procédé de fabrication de l'invention, le mélange de poudres est broyé selon un procédé de mécanosynthèse. Le mélange de poudres comprend la poudre mère métallique et la poudre complémentaire.

Généralement, lorsque les conditions de broyage ont été ajustées au cours de l'étape ii) de mécanosynthèse, la poudre mère métallique et la poudre complémentaire se mélangent intimement, de telle sorte que tous les atomes du composé intermédiaire qui sont destinés à former les particules d'oxyde dispersées s'incorporent, éventuellement et le plus probablement sous forme d'une solution solide, dans l'alliage maître qui forme alors la matrice métallique.

Concernant les caractéristiques de ces poudres, il n'y a pas de limitation réelle à la taille des particules des poudres composant le mélange de poudres utilisées dans le procédé de fabrication de l'invention.

Le plus souvent, les particules de la poudre mère ont un diamètre médian ($d_{50}$) compris entre 1 $\mu$m et 200 um, voire compris entre 20 um et 80 $\mu$m, typiquement entre 60 $\mu$m et 65 $\mu$m.

Le diamètre médian ($d_{50}$) d'une poudre est la taille pour laquelle 50 % de la population des particules composant cette poudre a une taille inférieure à $d_{50}$.

Il peut être déterminé par une technique telle que la méthode de diffraction laser via un granulomètre telle que décrite par exemple dans la norme ISO 13320 (édition 2009-12-01).

La poudre mère métallique comprend l'alliage maître qui est choisi parmi un alliage de base fer, un alliage de base nickel ou un alliage de base aluminium.

L'alliage de base fer peut comprendre en poids :

- 10 % à 30 % de chrome.
- 10 % à 30 % d'aluminium.
- 8 % à 25 % de chrome et 3 % à 8 % d'aluminium.

L'alliage de base fer peut être un acier, par exemple un acier austénitique, martensitique ou ferritique, le cas échéant respectant les compositions en poids précédentes.

L'alliage de base nickel peut comprendre en poids :

- 10 % à 40 % de chrome, tel que par exemple l'Inconel® 600 comprenant 14 % à 17 % de chrome.
- 10 % à 40 % de chrome, 0,2 % à 5 % d'aluminium, 0,3 % à 5 % de titane, 0 % à 5 % de tungstène, 0 % à 2 % de molybdène et 0 % à 2 % de tantale, tels que par exemple les Inconel® 625 ou 718 comprenant respectivement 20 % à 23 % ou 17 % à 21 % de chrome.
- 10 % à 30 % d'aluminium.

De manière générale, l'alliage de base nickel peut être un Inconel®.

Lorsque l'alliage maître est un alliage de base fer ou un alliage de base nickel, le mélange de poudres peut comprendre en poids 0,1 % à 2,5 % de la poudre complémentaire, voire 0,1 % à 0,5 %.

L'alliage de base aluminium peut comprendre en poids de 0 % à 1 % de fer (voire de 0 % à 0,5 % de fer), de 0 % à 1 % de silicium et de 0 % à 1 % de magnésium.

Il s'agit par exemple des compositions en poids suivantes :

- l'alliage d'aluminium 1100 comprenant 0,95 % de fer, 0,05 % de magnésium, 0,2 % de cuivre, et 0,1 % de zinc ;
- l'alliage d'aluminium 6262 comprenant jusqu'à 0,7 % de fer ;
- un alliage d'aluminium de la série 1000, comme par exemple l'alliage d'aluminium 1050 contenant moins de 0,4 % de fer, moins de 0,25 % de silicium et pas de magnésium ;
- un alliage d'aluminium de la série 6000, comme par exemple l'alliage d'aluminium 6063 contenant moins de 0,35 % de fer, moins de 0,6 % de silicium et moins de 0,9 % de magnésium.

Le fer est le plus souvent une impureté et le silicium améliore la coulabilité de l'alliage.

Lorsque l'alliage maître est un alliage de base aluminium, le mélange de poudres peut comprendre en poids 0,2 % à 5 % de la poudre complémentaire.

De manière générale, la proportion de la poudre précurseur qui précipite sous forme de particules d'oxyde au cours de l'étape iii) de traitement plasma peut être élevée grâce au bon rendement du procédé de fabrication de l'invention. Cette proportion est de 80 % (voire 90 %) à 100 %. Lorsqu'elle est de 100 %, tous les atomes destinés à former les particules d'oxyde dispersées ont précipité sous forme de renforts dans la matrice métallique de l'alliage ODS. Ainsi, selon la proportion complémentaire, la proportion des atomes destinés à former les particules d'oxyde dispersées présentes dans la matrice métallique de l'alliage ODS sous une forme autre qu'une particule d'oxyde cristallisée est réduite voire proche ou égale à 0 %.

Grâce à cette propriété du procédé de fabrication de l'invention, la proportion de poudre complémentaire dans le mélange de poudres à broyer peut donc être réduite. Ceci favorise, au cours de l'état de traitement plasma iii), la formation de particules d'oxyde de taille réduite (par exemple sous forme de nanorenforts) et leur répartition homogène dans la matrice métallique de l'alliage ODS. Ceci diminue également le coût du procédé de fabrication.

Cette proportion peut ainsi être de 0,1 % à 0,3 %, voire 0,1 % à 0,2 % de poudre complémentaire dans le mélange de poudres à broyer.

Concernant la poudre complémentaire, ses particules ont généralement un diamètre médian ($d_{50}$) compris entre 1 $\mu$m et 80 um. Ce diamètre médian peut alors être inférieur à celui de la poudre mère, ce qui favorise l'incorporation des atomes destinés à former les particules d'oxyde dispersées au sein de l'alliage maître de la poudre mère métallique.

Le composé intermédiaire destiné à incorporer les atomes destinés à former les particules d'oxyde dispersées est choisi parmi $YFe_3$, $Y_2O_3$, $Fe_2O_3$, $Fe_2Ti$, $FeCrWTi$, $TiH_2$, $TiO_2$, $Al_2O_3$, $HfO_2$, $SiO_2$, $ZrO_2$, $ThO_2$, $MgO$ ou leurs mélanges.

Un composé qui n'est pas un oxyde (par exemple $YFe_3$, $Fe_2Ti$, $FeCrWTi$, $TiH_2$) est un composé précurseur destiné à former après réaction chimique, au cours du procédé de fabrication de l'invention, l'oxyde métallique correspondant qui est présent dans l'alliage renforcé à l'issue de ce procédé, plus particulièrement sous forme de particule d'oxyde cristallisée.

Les atomes destinés à former les particules d'oxyde dispersées peuvent donc comprendre donc au moins un atome métallique choisi parmi l'yttrium, le titane, le silicium, le zirconium, le thorium, le magnésium, l'aluminium ou l'hafnium.

Le plus souvent, le composé intermédiaire est un oxyde métallique et comprend donc au moins un atome d'oxygène destiné à entrer dans la composition de la particule d'oxyde.

Lorsque le composé intermédiaire ne comprend pas d'atome d'oxygène, par exemple dans le cas d'un composé intermétallique (tel que par exemple $Fe_2Ti$ ou FeCrWTi) ou d'un hydrure (tel que par exemple $TiH_2$), l'oxygène est apporté par un autre composé intermédiaire de type oxyde métallique, complété éventuellement par de l'oxygène présent dans l'alliage maître.

Le mélange de poudres à broyer est soumis à l'étape ii) de broyage selon un procédé de mécanosynthèse.

Cette étape peut être réalisée dans un broyeur choisi par exemple parmi un broyeur à boulets ou un attriteur.

Le milieu gazeux de broyage est généralement une atmosphère de composition contrôlée. Il peut comprendre l'hydrogène, l'argon, l'hélium, l'azote, l'air ou leurs mélanges.

La poudre précurseur obtenue à l'issue de l'étape ii) de broyage est ensuite soumise à l'étape iii) de traitement plasma thermique.

Les paramètres de la torche plasma opérée pendant le traitement plasma de l'étape iii) sont ceux classiquement employés dans le domaine de la fabrication des poudres, par exemple dans les études suivantes :

- Fan, X.; Gitzhofer, F.; Boulos, M., "Statistical Design of Experiments for the Spheroidization of Powdered Alumina by Induction Plasma Processing", J Therm Spray Tech 1998, 7 (2), 247-253 [référence 3],
- Jiang, X.-L.; Boulos, M., "Induction Plasma Spheroidization of Tungsten and Molybdenum Powders", Transactions of Nonferrous Metals Society of China 2006, 16 (1), 13-17 [référence 4],
- Ye, R.; Ishigaki, T.; Jurewicz, J.; Proulx, P.; Boulos, M. I., "In-Flight Spheroidization of Alumina Powders in Ar-H2 and Ar-N2 Induction Plasmas", Plasma Chem Plasma Process 2004, 24 (4), 555-571 [référence 5].

Ces études montrent qu'il n'existe pas de paramètres opératoires stricts et que l'homme du métier peut les adapter aisément, par exemple par itération, en fonction de la quantité de poudre à traiter et/ou du type de poudres qu'il souhaite obtenir. Des paramètres opératoires indicatifs et adaptés au procédé de fabrication de l'invention sont néanmoins précisés ci-après.

La torche plasma utilisée peut être une torche plasma radiofréquence à couplage inductif, une torche à arc soufflé ou une torche à arc transféré.

Le plasma radiofréquence fonctionne sans électrode. Le transfert d'énergie est effectué par couplage inductif : un champ magnétique est appliqué sur le gaz plasmagène qui circule à l'intérieur de la bobine d'induction afin de former le plasma.

La puissance de la torche plasma est comprise entre 20 kW et 40 40 kW.

Le plasma thermique utilisé dans l'étape iii) du procédé de fabrication de l'invention peut être un plasma tel que décrit par exemple dans le document « P. Fauchais, "Plasmas thermiques : aspects fondamentaux", Techniques de l'ingénieur, fascicule D2810 V1, 2005) » [référence 6].

Le plasma thermique peut être à une température de plasma comprise entre 200 °C et 12000 °C, par exemple comprise entre 700 °C et 4000 °C afin de faire fondre l'aluminium ou le magnésium, ou le tungstène qui fond à 3500 °C. Cette température est généralement suffisante pour faire fondre les espèces, plus particulièrement celles comprenant un atome métallique, qui composent la poudre précurseur.

Le plasma thermique peut être tel que sa densité d'électrons est comprise entre $10^{14}$ m$^{-3}$ et $10^{26}$ m$^{-3}$, voire entre $10^{18}$ m$^{-3}$ et $10^{26}$ m$^{-3}$ notamment pour les plasmas à arc.

Les énergies d'ionisation peuvent être comprises entre 0,5 eV et 50 eV.

À de telles températures et/ou énergies du plasma thermique, le gaz plasmagène contenu dans la torche plasma est en général totalement ionisé. Pour cela, le gaz plasmagène peut être choisi parmi l'argon, l'hélium, l'azote ou leurs mélanges. Il constitue généralement le gaz central de la torche plasma, dans laquelle il peut être introduit selon un débit compris entre 10 litres/minutes et 40 litres/minutes.

Au début de l'étape iii), la pression dans l'enceinte réactionnelle de la torche plasma peut être basse (par exemple inférieure à 200 Pa) pour favoriser la formation du plasma en facilitant l'ionisation du gaz plasmagène.

Toutefois, au cours de l'étape iii), la pression dans l'enceinte réactionnelle de la torche plasma est comprise entre 25 kPa et 100 kPa. Plus cette pression est basse, plus le débit d'injection et donc le débit de traversée de la poudre précurseur dans la torche plasma est accéléré.

Pour une torche plasma radiofréquence à couplage inductif, l'enceinte réactionnelle correspond au tube de confinement.

Lorsque la poudre précurseur entre en contact avec le plasma, la réaction de précipitation (à savoir germination puis croissance) des particules d'oxyde est activée thermiquement et se produit quasiment instantanément.

Le débit d'injection de la poudre précurseur dans la torche plasma peut néanmoins être adapté, plus particulièrement en fonction de la composition et/ou de la quantité de poudre à traiter.

La poudre précurseur est injectée dans la torche plasma selon un débit compris entre 10 grammes/minute et 30 grammes/minute, préférentiellement entre 10 grammes/minute et 19 grammes/minute. Ce débit d'introduction de la poudre précurseur peut être réglé indépendamment du débit du gaz central, même s'il peut être augmenté au moins partiellement en augmentant les débits de gaz plasmagène et/ou gaz de gainage.

L'injection de la poudre précurseur dans la torche plasma peut être réalisée par vibration, avec une vis sans fin ou un disque tournant.

Une injection en partie amont (en référence au flux du gaz plasmagène) de l'enceinte réactionnelle est généralement couplée à un débit de poudre rapide, alors qu'une injection en partie avale de l'enceinte réactionnelle est couplée à un débit de poudre plus lent, afin notamment d'optimiser le temps de trajet de la poudre précurseur dans l'enceinte réactionnelle. En effet, la partie amont du plasma thermique dans la torche plasma est à une température plus élevée qui peut ne pas être optimale. De plus, un fort débit de poudre évite à la poudre de se disperser par recirculation au sein du plasma.

Par exemple, un bon compromis peut être de régler la hauteur de la sortie de la sonde d'injection décrite ci-après de telle sorte qu'elle débouche dans le premier tiers amont de l'enceinte réactionnelle.

Afin de maximiser la proportion de composé intermédiaire qui précipite sous forme de particule d'oxyde, il peut également être judicieux de coupler une puissance modérée de torche plasma avec un débit d'injection de poudre précurseur modéré.

Typiquement, une puissance de torche plasma comprise entre 10 kW et 40 kW (voire entre 10 kW et 30 kW) couplée à un débit de poudre précurseur compris entre 10 g/minutes et 30 g/minutes (voire entre 10 g/minutes et 19 g/minutes) peut améliorer :

- la proportion de particules d'oxyde ayant précipité : selon l'invention, cette proportion améliorée est telle que 80 % à 100 % en poids de l'atome métallique contenu dans l'ensemble de l'alliage renforcé est sous forme de particules d'oxyde cristallisées, préférentiellement 90 % à 100 %, encore plus préférentiellement 100 % ; et/ou
- le coefficient de circularité moyen des particules de la poudre d'alliage renforcé est compris entre 0,95 et 1, voire entre 0,98 et 1.

La poudre précurseur et/ou le gaz plasmagène peuvent être introduits dans la torche plasma via une sonde d'injection.

La poudre précurseur peut être injectée dans la torche plasma simultanément avec le gaz plasmagène, par exemple via la sonde d'injection.

La sonde d'injection peut être balayée sur sa surface externe par un gaz de gainage qui peut aider à stabiliser le plasma et augmenter le rendement du procédé de fabrication de l'invention.

Le gaz de gainage peut être introduit dans la torche plasma selon un débit compris entre 10 litres/minutes et 100 litres/minutes.

Il peut être choisi parmi l'argon, l'hélium, l'azote, l'hydrogène ou leurs mélanges.

Le gaz de gainage peut être un mélange d'au moins un gaz de gainage principal et d'au moins un gaz de gainage complémentaire.

Le gaz de gainage principal (le plus souvent l'argon) peut être introduit dans la torche plasma selon un débit élevé, par exemple un débit compris entre 40 litres/minutes et 100 litres/minutes.

Le gaz de gainage complémentaire présente une bonne conductivité thermique, ce qui améliore le transfert thermique entre le gaz plasmagène et la poudre précurseur. Il s'agit par exemple de l'hélium, l'azote ou de préférence l'hydrogène pour ses propriétés réductrices qui limitent l'oxydation en surface des particules de poudre précurseur. Le gaz de gainage complémentaire peut être injecté dans la torche plasma selon un débit inférieur au débit d'introduction du gaz de gainage principal, par exemple selon un débit compris entre 1 litre/minutes et 40 litres/minutes.

À l'issue de l'étape iii) de traitement par plasma thermique selon le procédé de fabrication, une poudre d'un alliage ODS est obtenue.

Les particules de cette poudre ont généralement une taille proche ou identique à celle de la poudre précurseur obtenue à l'issue de l'étape ii) de broyage.

Concernant leur microstructure, les particules de la poudre d'alliage ODS comprennent les particules d'oxyde dispersées et en tout ou partie cristallisées dans le volume de la matrice métallique de l'alliage ODS.

Les particules d'oxyde peuvent être réparties de manière homogène dans la totalité du volume de la matrice métallique, et pas seulement dans une zone déterminée. En particulier, elles ne se localisent pas de manière privilégiée aux joints de grains d'une particule de poudre de l'alliage ODS, ce qui serait néfaste aux propriétés mécaniques d'un matériau obtenu à partir d'une poudre d'alliage ODS (fissures, ténacité plus faible,...).

La microstructure isotrope de l'alliage renforcé garantit notamment des propriétés mécaniques homogènes dans l'ensemble de la poudre, et donc dans un matériau éventuellement fabriqué avec cette poudre, et ce quelle que soit la direction de sollicitation mécanique de ce matériau.

Les particules d'oxyde comprennent au moins un oxyde choisi parmi $Y_2O_3$, $TiO_2$, $Al_2O_3$, $HfO_2$, $SiO_2$, $ZrO_2$, $ThO_2$, MgO $Al_2O_3$, $Y_2Ti_2O_7$, $Y_2TiO_3$.

Généralement, lorsque la poudre complémentaire ne contient qu'un seul composé intermédiaire, typiquement un oxyde métallique, il entre directement dans la composition de la particule d'oxyde dispersée dans l'alliage ODS, voire se retrouve partiellement dans la matrice si une partie de la poudre complémentaire n'a pas précipité.

Lorsque la poudre complémentaire comprend plusieurs composés intermédiaires, un ou plusieurs types de combinaisons chimiques entre ces composés peuvent se produire, pouvant mener à la formation d'oxydes mixtes. Par exemple, lorsque la poudre complémentaire comprend l'oxyde d'yttrium $Y_2O_3$ et l'hydrure de titane $TiH_2$, au moins un oxyde choisi parmi $Y_2Ti_2O_7$, $Y_2TiO_5$, $YTiO_3$, $YTi_2O_6$ peut composer tout ou partie de la particule d'oxyde de l'alliage ODS.

Le plus souvent, lorsque l'oxyde comprend de l'yttrium et/ou du titane, il s'agit d'un oxyde de structure pyrochlore tel que par exemple $Y_2Ti_2O_7$.

Les particules d'oxyde formées dans l'alliage ODS peuvent avoir un diamètre médian ($d_{50}$) compris entre 1 nm et 500 nm. De préférence, il est compris entre 1 nm et 200 nm, voire entre 1 nm et 150 nm : il s'agit donc de nanoparticules. De manière inattendue, un tel résultat peut être obtenu par le procédé de fabrication de l'invention sans utiliser un anneau de trempe incorporé dans la torche plasma.

Le plus souvent, tout ou partie des particules de la poudre d'alliage renforcé est sphérique, ou tout du moins sphéroïdale.

Le coefficient de circularité moyen des particules de la poudre d'alliage renforcé est ainsi compris entre 0,95 et 1, voire entre 0,98 et 1. Plus la valeur de ce coefficient pour une poudre est proche de 1, plus grande est la proportion des particules de cette poudre qui ont une morphologie proche de la sphère.

Comme indiqué dans la publication « G. Mollon "Mécanique des matériaux granulaires", INSA de Lyon, 2015 » (en particulier les pages 23 et 24) [référence 7] disponible à l'adresse Internet suivante : "http://guilhem.mollon.free.fr/Telechargements/Mecaniq ue_des_Materiaux_Granulaires.pdf"

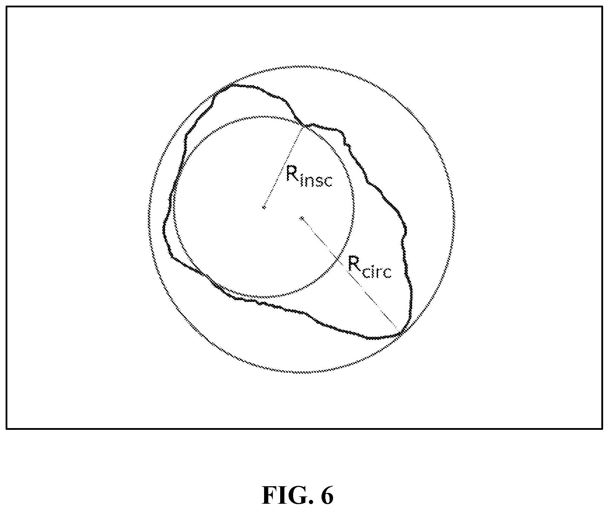

, et conformément à la norme ISO 9276-6 (édition 2008), le coefficient de circularité d'une particule est un descripteur de forme pouvant être calculé à partir de la formule suivante à partir du rayon du cercle totalement inscrit dans la particule ($R_{inscr}$) et du rayon du cercle qui circonscrit totalement la particule ($R_{circ}$), ces rayons étant représentés sur la Figure 6 extraite de la référence [7] :

$$Circularité = \sqrt{\frac{R_{insc}}{R_{circ}}}$$

En pratique, le coefficient de circularité moyen d'une poudre peut être obtenu à partir de photographies de la particule suivie de son analyse numérique automatisée. De préférence, plusieurs photographies de la même particule sont prises sous des angles différents. La circularité moyennée pour ces différents angles est alors calculée. Une fois cette opération réalisée sur plusieurs grains, la moyenne sur tous ces grains de la circularité moyennée pour chaque grain aboutit au coefficient de circularité moyen de la poudre.

D'un point de vue instrumental, le coefficient de circularité moyen d'une poudre peut être obtenu automatiquement à l'aide d'un appareillage tel que le « *CAMSIZER Dynamic Image Analyzer* » commercialisé par la société HORIBA Scientic.

Concernant sa composition, l'alliage renforcé peut en outre comprendre en poids au moins un des éléments suivants :

- de 10 à 5000 ppm de silicium ;
- de 10 à 100 ppm de soufre ;
- moins de 20 ppm de chlore ;
- de 2 à 10 ppm de phosphore ;
- de 0,1 à 10 ppm de bore ;
- de 0,1 à 10 ppm de calcium ;
- moins de 0,1 ppm de chacun des éléments suivants : lithium, fluor, métaux lourds, Sn, As, Sb.

Ces éléments sont le plus souvent contenus initialement dans l'alliage maître. Puisque la composition chimique de la poudre mère métallique n'est généralement pas modifiée au cours du procédé de fabrication de l'invention, ces éléments se retrouvent dans ce cas inchangés dans la matrice métallique.

Puisque tout ou partie de la matrice métallique et/ou des particules d'oxyde qu'elle contient peut être cristallisée, la poudre d'alliage renforcé peut elle-même être cristallisée en tout ou partie (de préférence totalement cristallisée).

La microstructure des particules de la poudre d'alliage renforcé peut être de préférence monocristalline (toutes les particules ont la même structure cristalline), ou également polycristalline (les particules peuvent avoir des structures cristallines différentes).

La proportion élevée de poudre d'alliage renforcé qui est cristallisée peut être mise à profit pour son utilisation dans des procédés de fabrication de type projection à froid (dit « cold spray » en anglais).

D'autres caractéristiques de microstructure et/ou de composition de l'alliage renforcé obtenu par le procédé de fabrication de l'invention seront précisées ci-après.

L'invention concerne également une poudre d'alliage renforcé selon la revendication 10.

L'invention concerne plus particulièrement une poudre d'alliage renforcé dont les grains formant les particules de la poudre comprennent une matrice métallique dans le volume de laquelle sont dispersées des particules d'oxyde cristallisées.

À la connaissance des inventeurs, il n'a jamais été obtenu un alliage ODS directement sous forme de poudre, ce qui a notamment pour avantage de procurer un bon contrôle des précipités, de pouvoir être utilisé dans un procédé de mise en forme à froid (par exemple de type « cold spray ») et/ou d'obtenir via un procédé de fabrication additive un alliage ODS (par exemple un acier ODS) présentant une densité améliorée. Cette obtention directe sous forme de poudre (donc sous forme d'un matériau divisé, pulvérulent), et non pas sous forme d'un matériau déjà densifié, a notamment pour avantage de permettre une utilisation directe, éventuellement continue par exemple en mode batch, de la poudre d'alliage renforcé selon l'invention dans un procédé de densification permettant comme précisé ci-après d'obtenir un matériau massif, et plus particulièrement une pièce.

La proportion en poids des particules d'oxyde qui sont cristallisées est telle que les particules d'oxyde cristallisées comprennent en poids 80 % à 100 %, (préférentiellement 90 % à 100 %, encore plus préférentiellement 100 %) de l'atome métallique contenu dans l'ensemble de l'alliage renforcé. Cet atome métallique correspond à celui présent initialement dans le composé intermédiaire, par exemple l'yttrium, le titane, le silicium, le zirconium, le thorium, le magnésium, l'aluminium ou l'hafnium.

Autrement dit, la matrice métallique peut comprendre sous forme dissoute (typiquement à l'échelle atomique, par exemple en solution solide) et/ou sous forme de particules d'oxyde amorphe ; par rapport au poids total dudit atome métallique contenu dans l'ensemble de l'alliage renforcé :

- 0 % à 20 % en poids dudit atome métallique ;
- préférentiellement 0 % à 10 %, voire 0 % dudit atome métallique.

Le poids de l'atome métallique dans les différentes zones de l'alliage renforcé peut être mesuré par exemple via une microanalyse X par EDX par Microscopie Electronique à Transmission (MET) (par exemple pour une zone témoin qui est extrapolée à l'ensemble de l'alliage renforcé), typiquement pour une mesure dans la matrice métallique. Le cas échéant, le poids de l'atome métallique contenu dans les particules d'oxyde amorphe et/ou les particules d'oxyde cristallisées peut être également déterminé par une analyse chimique, ou déterminé en considérant que ce poids est le complément au poids d'atome métallique qui est contenu dans la seule matrice métallique (à savoir que la somme de ces deux poids équivaut au poids d'atome métallique total initialement présent dans la poudre complémentaire).

Les particules de l'alliage renforcé ont un coefficient de circularité moyen qui est compris entre 0,95 et 1.

La matrice métallique de l'alliage renforcé peut être cristallisée.

De préférence, les particules d'oxyde sont réparties de manière homogène dans le volume de la matrice métallique, en particulier les particules d'oxyde ne sont pas présentes préférentiellement aux joints de grains des particules de poudre de l'alliage renforcé.

La matrice métallique est composée d'un alliage de base fer, un alliage de base nickel ou un alliage de base aluminium.

L'alliage de base fer peut comprendre en poids :

- 10 % à 30 % de chrome.
- 10 % à 30 % d'aluminium.
- 8 % à 25 % de chrome et 3 % à 8 % d'aluminium.

L'alliage de base fer peut être un acier, par exemple un acier austénitique, martensitique ou ferritique, le cas échéant respectant les compositions en poids précédentes.

L'alliage de base nickel peut comprendre en poids :

- 10 % à 40 % de chrome, tel que par exemple l'Inconel® 600 comprenant 14 % à 17 % de chrome.
- 10 % à 40 % de chrome, 0,2 % à 5 % d'aluminium, 0,3 % à 5 % de titane, 0 % à 5 % de tungstène, 0 % à 2 % de molybdène et 0 % à 2 % de tantale, tels que par exemple les Inconel® 625 ou 718 comprenant respectivement 20 % à 23 % ou 17 % à 21 % de chrome.

- 10 % à 30 % d'aluminium.

De manière générale, l'alliage de base nickel peut être un Inconel®.

Lorsque la matrice métallique est composée d'un alliage de base fer ou d'un alliage de base nickel, l'alliage renforcé peut comprendre en poids 0,1 % à 2,5 % des particules d'oxyde, voire 0,1 % à 0,5 %.

L'alliage de base aluminium peut comprendre en poids de 0 % à 1 % de fer (voire de 0 % à 0,5 % de fer), de 0 % à 1 % de silicium et de 0 % à 1 % de magnésium.

Il s'agit par exemple des compositions en poids suivantes :

- l'alliage d'aluminium 1100 comprenant 0,95 % de fer, 0,05 % de magnésium, 0,2 % de cuivre, et 0,1 % de zinc ;
- l'alliage d'aluminium 6262 comprenant jusqu'à 0,7 % de fer ;
- un alliage d'aluminium de la série 1000, comme par exemple l'alliage d'aluminium 1050 contenant moins de 0,4 % de fer, moins de 0,25 % de silicium et pas de magnésium ;
- un alliage d'aluminium de la série 6000, comme par exemple l'alliage d'aluminium 6063 contenant moins de 0,35 % de fer, moins de 0,6 % de silicium et moins de 0,9 % de magnésium.

Le fer est le plus souvent une impureté et le silicium améliore la coulabilité de l'alliage.

Lorsque la matrice métallique est composée d'un alliage de base aluminium, l'alliage renforcé peut comprendre en poids 0,2 % à 5 % des particules d'oxyde.

La proportion des particules d'oxyde dans l'alliage renforcé est telle qu'il peut comprendre en poids 0,1 % à 0,5 % des particules d'oxyde.

S'il reste une partie de la poudre complémentaire n'ayant pas précipité au cours du procédé de fabrication de l'invention, l'alliage renforcé peut comprendre de 0,1 % à 2,5 % en poids d'un atome du composé intermédiaire (typiquement l'atome métallique) destiné à former les particules d'oxyde, de préférence de 0,1 % à 1 %, voire moins de 0,1 %. Le composé intermédiaire est alors généralement localisé dans la matrice métallique. Ce pourcentage traduit le degré de précipitation du ou des composés intermédiaires sous forme de particule d'oxyde. Il peut notamment être mesuré par microanalyse X (par exemple analyse EDX au Microscope Électronique à Transmission) focalisée sur un volume de la matrice métallique ne comprenant pas de particules d'oxyde.

S'il subsiste dans l'alliage renforcé, le composé intermédiaire destiné à former les particules d'oxyde peut être $YFe_3$, $Y_2O_3$, $Fe_2O_3$, $Fe_2Ti$, FeCrWTi, $TiH_2$, $TiO_2$, $Al_2O_3$, $HfO_2$, $SiO_2$, $ZrO_2$, $ThO_2$, MgO ou leurs mélanges.

Partant de cette composition, les particules d'oxyde comprennent au moins un oxyde choisi parmi $Y_2O_3$, $TiO_2$, $Al_2O_3$, $HfO_2$, $SiO_2$, $ZrO_2$, $ThO_2$, MgO $Al_2O_3$, $Y_2Ti_2O_7$, $Y_2TiO_5$.

Les particules d'oxyde peuvent avoir un diamètre médian ($d_{50}$) compris entre 1 nm et 500 nm, voire entre 1 nm et 200 nm.

L'alliage renforcé peut en outre comprendre en poids au moins un des éléments suivants :

- de 10 à 5000 ppm de silicium ;
- de 10 à 100 ppm de soufre ;
- moins de 20 ppm de chlore ;
- de 2 à 10 ppm de phosphore ;
- de 0,1 à 10 ppm de bore ;
- de 0,1 à 10 ppm de calcium ;
- moins de 0,1 ppm de chacun des éléments suivants : lithium, fluor, métaux lourds, Sn, As, Sb.

Ces éléments se retrouvent le plus souvent dans la matrice métallique.

L'invention concerne également l'utilisation d'une poudre d'alliage renforcé telle que définie précédemment (à savoir, la poudre d'alliage renforcé dont les grains formant les particules de la poudre comprennent une matrice métallique dans le volume de laquelle sont dispersées des particules d'oxyde cristallisées) selon une ou plusieurs des variantes décrites dans la présente description, utilisation dans laquelle la poudre d'alliage renforcé de l'invention est soumise à un procédé de densification de la poudre d'alliage renforcé, afin de fabriquer un matériau massif (plus particulièrement une pièce) ou à un procédé de revêtement afin de revêtir un support avec la poudre d'alliage renforcé (plus particulièrement une fine épaisseur, typiquement comprise entre 20 μm et 50 mm).

Comme indiqué précédemment, les caractéristiques de la poudre d'alliage renforcé selon l'invention se prêtent particulièrement à sa densification en vue d'obtenir un matériau massif, plus particulièrement sous forme d'une pièce ou son dépôt sur un support sous forme d'un revêtement (qui selon les cas, en particulier pour une épaisseur relativement importante, peut également être considéré comme une couche d'un matériau densifié).

Le procédé de densification peut être choisi parmi une large gamme de procédés de densification d'une poudre (en particulier d'une poudre d'alliage ODS) qui sont bien connus de l'homme du métier, par exemple un procédé de fabrication additive ou un procédé de moulage par injection de poudre, afin de fabriquer le matériau massif, plus particulièrement la pièce ou le revêtement.

Le principe de la fabrication additive (également appelée « impression 3D ») est celle d'un processus de fabrication génératif se résumant à deux étapes réitérées jusqu'à l'obtention du produit fini massif :

1. Génération d'une couche de matière suivant un contour et une épaisseur fixés. La matière est déposée uniquement là où elle est nécessaire ;

2. Réalisation de la nouvelle couche par addition de matière au-dessus de la couche précédente. La fabrication peut se résumer à une fabrication dite "en escalier".

La fabrication additive est décrite plus en détail par exemple dans les documents suivants qui sont intégrés par référence à la présente description :

- [référence 8] : F. Laverne et al., "Fabrication additive - Principes généraux", Techniques de l'ingénieur, Fascicule BM7017 V2 (publication du 10 février 2016) ;

- [référence 9] : H. Fayazfara et al., "critical review of powder-based additive manufacturing of ferrous alloys: Process parameters, microstructure and mechanical properties", Materials & Design, Volume 144, 2018, Pages 98-128.

- [référence 10] : T.DebRoy et al., "Additive manufacturing of metallic components - Process, structure and properties", Progress in Materials Science, Volume 92, 2018, pages 112-224.

- [référence 11] : Ministère de l'économie et des finances, République Française, "Prospective - futur de la fabrication additive - rapport final", édition de janvier 2017, ISBN : 978-2-11-151552-9 ; en particulier l'Annexe 2 (pages 205 à 220) notamment lorsqu'il décrit les procédés de fabrication additive utilisant une poudre métallique (annexe 2, Les procédés de fabrication, paragraphes 3, 4 et 5).

Plus particulièrement, le procédé de fabrication additive est choisi parmi un procédé de fusion sélective par laser (en anglais "Sélective Laser Melting" (SLM) ou "Laser Powder Bed Fusion" (L-PBF)), de fusion sélective par faisceau d'électrons (en anglais "Electron Beam Melting" (EBM) ou "Electron Powder Bed Fusion" (E-PBF)), de frittage sélectif par laser (en anglais "Sélective Laser Sintering" (SLS)), de projection laser (en anglais "Direct Métal Déposition" (DMD) ou "laser cladding") ou de projection de liant (en anglais "binder jetting").

Le principe du moulage par injection de poudre (en anglais "Powder injection molding") est un moulage par injection de pièces à partir de mélange de poudre métallique ou céramique et de liant polymère, suivi par un déliantage (élimination du liant) de la pièce dans un four sous atmosphère contrôlée (typiquement une atmosphère similaire ou identique au milieu gazeux de broyage décrit précédemment à l'exception de l'hydrogène), puis par la consolidation de celle-ci par frittage. La température de frittage est par exemple comprise entre 350 °C et 1220 °C.

Selon le matériau utilisé, on parle en anglais de "Ceramic Injection Molding" (CIM) ou de "Métal Injection Molding" (MIM).

Le moulage par injection de poudre est décrit plus en détail par exemple dans le document suivant qui est intégré par référence à la présente description :

- [référence 12] : D. Moinard et al., "Procédés de frittage PIM", Techniques de l'ingénieur, Fascicule M3320 V1 (publication du 10 juin 2011).

Le procédé de revêtement peut quant à lui être choisi parmi un procédé de revêtement bien connu de l'homme du métier, par exemple un procédé de projection à froid ou un procédé de projection thermique.

Le principe de la projection à froid consiste à accélérer un gaz (tel que par exemple l'azote, l'hélium ou l'argon), chauffé généralement à une température de 100 °C à 700°C, à des vitesses supersoniques dans une buse du type « De Laval » puis la poudre de matériau à projeter (ici, la poudre d'alliage renforcé ODS selon l'invention) est introduite dans la partie haute pression (entre 10 bars et 40 bars) de la buse et est projetée à « l'état non fondu » vers la surface de la pièce à revêtir à une vitesse pouvant aller de 600 m/s à 1200 m/s. Au contact de la pièce, les particules subissent une déformation plastique et forment à l'impact un revêtement dense et adhérent.

L'intérêt de ce mode de réalisation réside dans l'absence de fusion des particules, donc dans un risque d'oxydation très faible et une possible intégration en milieu hostile.

La projection à froid est décrite plus en détail par exemple dans le document suivant qui est intégré par référence à la présente description :

- [référence 13] : A. Papyrin, "Cold Spray Technology", ISBN-13:978-0-08-045155-8, édition 2007.

Le procédé de projection thermique peut être choisi parmi un procédé de projection thermique flamme, un procédé de projection arc électrique entre deux fils ou un procédé de projection plasma soufflé.

La projection thermique est décrite plus en détail par exemple dans le document suivant qui est intégré par référence à la présente description :

- [référence 14] : A. Proner, "Revêtements par projection thermique", Techniques de l'ingénieur, Fascicule M1645 V2 (publication du 10 septembre 1999).

L'invention est avantageusement complétée par les caractéristiques suivantes, prises seules ou selon l'une quelconque de leurs combinaisons techniquement possibles.

## EXPOSE DETAILLE DE L'INVENTION

Dans la présente description de l'invention, un verbe tel que «comprendre», «incorporer», «inclure», « contenir » et ses formes conjuguées sont des termes ouverts et n'excluent donc pas la présence d'élément(s) et/ou étape(s) additionnels s'ajoutant aux élément(s) et/ou étape(s) initiaux énoncés après ces termes. Toutefois, ces termes ouverts visent en outre un mode de réalisation particulier dans lequel seul(s) le(s) élément(s) et/ou étape(s) initiaux, à l'exclusion de tout autre, sont visés ; auquel cas le terme ouvert vise en outre le terme fermé «consister en», «constituer », «composer de » et ses formes conjuguées.

L'usage de l'article indéfini « un » ou « une » pour un élément ou une étape n'exclut pas, sauf mention contraire, la présence d'une pluralité d'éléments ou étapes.

Tout signe de référence entre parenthèses dans les revendications ne saurait être interprété comme limitatif de la portée de l'invention.

Par ailleurs, sauf indication contraire :

- les valeurs aux bornes sont incluses dans les gammes de paramètres indiquées ;
- les températures indiquées sont considérées pour une mise en œuvre à pression atmosphérique ;
- tout pourcentage en poids d'un composant de l'alliage renforcé, de l'alliage maître, du mélange de poudres se rapporte au poids total de cet alliage ou de ce mélange.

Dans la présente description, on entend désigner par « alliage de base » du métal entrant notamment dans la composition de l'alliage maître ou de tout autre alliage, tout alliage à base du métal dans lequel la teneur du métal est au minimum de 50 % en poids du métal de l'alliage, particulièrement plus de 90 %, voire plus de 95 %. Le métal de base est le fer, le nickel ou l'aluminium. L'alliage de base est de préférence apte à être utilisé dans le domaine nucléaire et/ou sous irradiation.

L'expression « selon une ou plusieurs des variantes décrites dans la présente description » pour une matière / un élément, se réfère notamment aux variantes qui concernent la composition chimique et/ou la proportion des constituants de cette matière et de toute espèce chimique supplémentaire qu'il peut éventuellement contenir et notamment aux variantes qui concernent la composition chimique, la structure, la géométrie, l'agencement dans l'espace et/ou la composition chimique de cet élément ou d'un sous-élément constitutif de l'élément. Ces variantes sont par exemple celles indiquées dans les revendications.

D'autres objets, caractéristiques et avantages de l'invention vont maintenant être précisés dans la description qui suit de modes de réalisation particuliers de l'invention, donnés à titre illustratif et non limitatif, en référence aux Figures 1A à 6 annexées.

## BREVE DESCRIPTION DES FIGURES

Les Figures 1A (vue générale) et 1B (vue d'une coupe) représentent des clichés obtenus par Microscopie Électronique à Balayage (MEB) d'une poudre précurseur obtenue après l'étape ii) de broyage du procédé de fabrication de l'invention.

Les Figures 2A (vue générale), 2B et 3A (vue d'une coupe) ainsi que 3B (vue zoomée d'une coupe se focalisant sur les précipités d'oxyde) représentent des clichés MEB d'une poudre d'un alliage renforcé obtenue après l'étape iii) de traitement plasma du procédé de fabrication de l'invention.

La Figure 3C est un tableau indiquant des pourcentages molaires atomiques obtenus par spectrométrie rayons X par dispersion d'énergie (connu par l'acronyme anglais EDX pour « *Energy Dispersive X-Ray spectrometry* ») au sein des précipités d'oxyde identifiés par les index numériques 1 à 7 sur la Figure 3B.

Les Figures 4A et 4B représentent un cliché MET en champ clair d'une coupe d'un alliage ODS obtenu par le procédé de fabrication de l'invention.

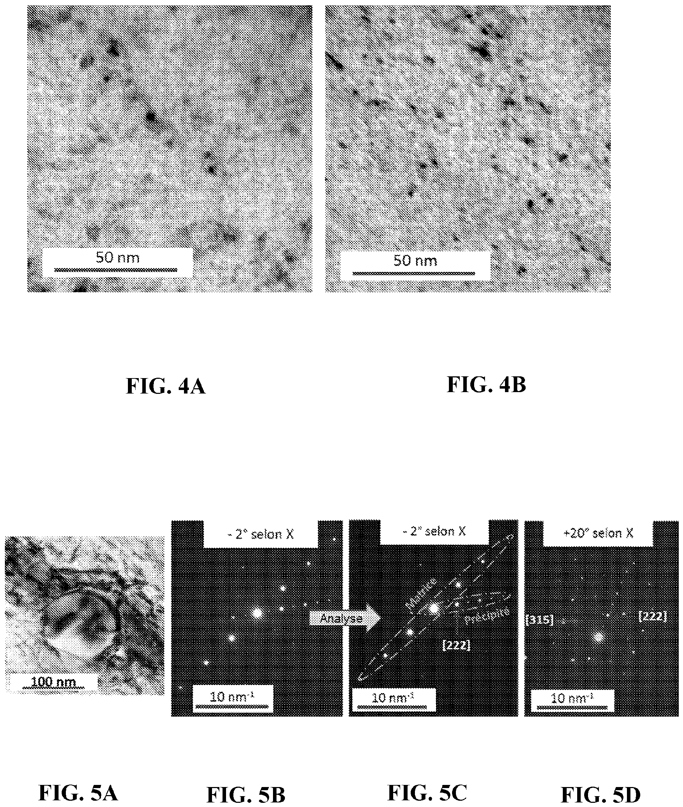

Les Figures 5A à 5D représentent une série de clichés visant à analyser un précipité d'oxyde contenu dans la matrice d'une poudre alliage ODS obtenu par le procédé de fabrication de l'invention. La Figure 5A obtenue par MET champ clair est centrée sur le précipité d'oxyde analysé. Les Figures 5B et 5C sont des clichés de diffraction MET obtenus selon une inclinaison du porte-échantillon d'un angle de -2° selon X, respectivement sous forme brute et sous forme annotée après analyse pour repérer les tâches de diffraction correspondant à la matrice et au précipité d'oxyde. La Figure 5D est le cliché annoté correspondant obtenu par inclinaison du porte-échantillon d'un angle de - 20° selon X.

La Figure 6 est un schéma illustrant les paramètres $R_{inscr}$ et $R_{circ}$ nécessaires au calcul de la circularité d'un grain de poudre à partir d'un cliché pris pour un angle donné.

## EXPOSE DE MODES DE REALISATION PARTICULIERS

Les modes de réalisation particuliers qui suivent concernent le procédé de fabrication de l'invention, ainsi que la composition et la microstructure de l'alliage renforcé qu'il permet d'obtenir.

### 1. Mise en oeuvre du procédé de fabrication d'un alliage renforcé selon l'invention.

Dans un broyeur à boulets sous atmosphère d'hydrogène, une poudre mère métallique composée d'un alliage maître à base de fer (composition en poids : 14 % de Cr, 1 % de W, 0,3 % de Si, 0,3 % de Mn et de 0,2 % de Ni, 1000 ppm de C, et le reste de Fe) est mélangée avec une poudre complémentaire, comprenant en poids par rapport au mélange total de poudres, 0,3 % d'une poudre d'hydrure de titane ($TiH_2$) et 0,3 % d'une poudre d'oxyde d'yttrium ($Y_2O_3$) en tant que composés intermédiaires destinés à former des particules d'oxyde.

Le mélange de poudres est broyé pendant 176 heures afin de former par mécanosynthèse une poudre précurseur comprenant une matrice métallique composée de l'alliage maître dans lequel les atomes de titane, yttrium et oxygène se sont incorporés.

À ce stade du procédé de fabrication de l'invention, aucune particule d'oxyde sous forme de précipités n'est encore formée.

La poudre précurseur est ensuite introduite dans une torche plasma radiofréquence à couplage inductif pouvant délivrer jusqu'à 80 kW de puissance (modèle PL50 commercialisé par la société Tekna).

Ce type de torche est décrit par exemple dans le document « Kim, K. S.; Moradian, A.; Mostaghimi, J.; Soucy, G. Modeling of Induction Plasma Process for Fullerene Synthesis : Effect of Plasma Gas Composition and Operating Pressure ; Plasma Chemistry and Plasma Processing 2010, 30, 91-110 ».

La torche plasma comprend un tube de confinement en céramique baignant dans de l'eau de refroidissement circulant à grande vitesse le long de sa paroi externe. Le refroidissement du tube est indispensable pour le protéger de l'important flux thermique généré par le plasma. Autour du tube de confinement et au-delà du canal de refroidissement se trouve la bobine d'induction incrustée dans le corps de la torche plasma et reliée au générateur haute fréquence. Cette bobine génère le champ magnétique alternatif qui crée le milieu plasma.

A l'intérieur du tube de confinement, un gaz plasmagène (aussi appelé gaz central) est injecté en continu.

Pour protéger la paroi interne du tube de confinement en céramique, un gaz de gainage est introduit en vortex le long de la paroi interne du tube de confinement grâce à un tube intermédiaire en quartz placé à l'intérieur du tube de confinement.

La poudre précurseur est injectée directement au centre de la décharge plasma via une sonde d'injection refroidie par eau et positionnée dans le premier tiers amont de l'enceinte réactionnelle de la torche plasma. Elle est alors chauffée en vol et fondue. Puisque les plasmas à induction fonctionnent sans électrode en contact avec le gaz plasmagène, un traitement sans contamination peut être réalisé.

La poudre précurseur obtenue précédemment est soumise à un plasma thermique selon les conditions opératoires indiquées dans le Tableau 1. Les débits de gaz sont les suivants :

- gaz plasmagène (argon) = 30 L/minutes ;
- gaz de gainage principal (argon) - de 80 à 100 L/minutes ;
- gaz de gainage complémentaire (hélium ou hydrogène) = de 0 à 30 L/minutes.

La proportion en poids de poudre ODS conforme à l'invention (plus particulièrement des particules d'oxyde cristallisées ayant en outre un coefficient de circularité moyen qui est compris entre 0,95 et 1) par rapport au poids total de mélange de poudres traité est indiquée à la dernière colonne du Tableau 1. Elle est estimée en première approximation par une analyse des clichés MEB des poudres obtenues à l'issue du procédé de fabrication de l'invention.

Tableau 1

| | Débit de poudre précurseur (g/min) | Puissance plasma de la torche plasma (kW) | Pression réacteur (kPa) | Débit du gaz de gainage principal (Ar) (L/min) | Débit du gaz de gainage complémen taire (He) (L/min) | Débit du gaz de gainage complém entaire (H$_2$) (L/min) | Proportion de poudres aux grains sphériques comprenant des particules d'oxyde cristallisées (% en poids) |
|---|---|---|---|---|---|---|---|
| Essai 1 | 21 | 22 | 20,6 | 100 | 0 | 0 | < 5 % |
| Essai 2 | 21 | 31 | 34,5 | 100 | 0 | 4 | ~ 60 % |
| Essai 3 | 29 | 25 | 41,4 | 100 | 10 | 0 | ~ 80/90% |
| Essai 4 | 12 | 25 | 41,4 | 100 | 10 | 0 | 100 % |
| Essais 5 , 6 et 7 | 40 | 60 | 96,6 | 100 | 30 | 0 | ~ 20 à 30 % |
| Essai 8 | 29 | 60 | 68,9 | 80 | 30 | 0 | ~ 20 à 30 % |
| Essai 9 | 29 | 60 | 41,4 | 80 | 30 | 0 | ~ 20 à 30 % |
| Essai 10 | 29 | 60 | 96,6 | 80 | 30 | 0 | ~ 20 à 30 % |
| Essai 11 | 29 | 60 | 41,4 | 100 | 10 | 0 | ~ 20 à 30 % |
| Essai 12 | 12 | 25 | 41,4 | 100 | 10 | 0 | 100 % |
| Essai 17 | 15 | 40 | 68,9 | 60 | 40 | 0 | 100 % |
| Essai 18 | 15 | 40 | 68,9 | 80 | 0 | 20 | 90 à 100 % |
| Essai 19 | 15 | 35 | 68,9 | 80 | 0 | 20 | ~ 50 à 60 % |

Le Tableau 1 montre que la proportion d'oxyde qui a précipité est plus importante pour des puissances modérées de torche plasma (typiquement entre 10 kW et 40 kW, voire entre 10 kW et 30 kW) et un débit modéré d'injection de la poudre précurseur dans la torche plasma (typiquement <30 g/min).

Ainsi, dans les essais 4, 12, 17 et 18, une poudre d'alliage ODS dont les particules sont sphériques et dans lesquelles 100 % des nanorenforts d'oxydes ont germé est obtenue avec :

- un débit de poudre de 12 g/minutes (essais 4 et 12) ou 15 g/minutes (essais 17 et 18),
- une puissance pour la torche plasma de 25 kW (essais 4 et 12) ou 40 kW (essais 17 et 18),
- une pression de 6 psi soit 41 369 Pa (essais 4 et 12) ou 10 psi soit 68947 Pa (essais 17 et 18) dans l'enceinte réactionnelle de la torche plasma,
- débits de gaz de 30 litres/minutes d'argon pour le gaz central, 100 litres/minutes d'argon pour le gaz de gainage principal et de 10 litres/minutes d'hélium pour le gaz de gainage complémentaire (essais 4 et 12) ; ou débits de gaz de 30 litres/minutes d'argon pour le gaz central, 60 litres/minutes d'argon pour le gaz de gainage principal et de 40 litres/minutes d'hélium pour le gaz de gainage complémentaire (essai 17) ; ou débits de gaz de 30 litres/minutes d'argon pour le gaz central, 80 litres/minutes d'argon pour le gaz de gainage principal et de 20 litres/minutes d'hydrogène pour le gaz de gainage complémentaire (essai 18).

La comparaison des essais 4 et 12 montre également la parfaite reproductibilité du procédé de fabrication de l'invention, et donc le contrôle des caractéristiques de la poudre d'alliage ODS qu'il permet avantageusement d'obtenir.

Typiquement, pour obtenir une poudre d'alliage ODS base fer dont les particules sont sphériques (plus particulièrement avec un coefficient de circularité moyen qui est compris entre 0,95 et 1) et comprennent une proportion déterminée de nanorenforts (de taille moyenne typiquement comprise entre 50 nm à 500 nm, de préférence comprise entre 50 nm et 200 nm) d'oxyde dispersés de manière homogène dans la matrice métallique de l'alliage ODS, l'homme du métier peut par exemple utiliser les conditions opératoires suivantes pour la torche plasma, les paramètres prioritaires sur lesquels agir de manière séparée ou combinée étant la puissance de la torche plasma et le débit de poudre précurseur :

=> pour 20 % à 30 % en poids de particules d'oxydes cristallisées par rapport au poids initial de la poudre complémentaire (à savoir que 70 % à 80 % de la poudre complémentaire n'a pas produit de particules d'oxyde cristallisées) (ce qui ne fait pas partie de l'invention) :

- puissance de la torche plasma : entre 40 kW et 80 kW (voire entre 30 kW et 80 kW),
- débit de poudre précurseur : entre 20 g/min et 45 g/min,

et éventuellement au moins l'une des conditions opératoires suivantes :

- une pression dans l'enceinte réactionnelle de la torche plasma : entre 5 psi soit 34474 Pa et 14,5 psi (soit la pression atmosphérique),
- débit du gaz de gainage principal : entre 80 L/min et 100 L/min,
- débit du gaz de gainage complémentaire : entre 10 L/min et 40 L/min.

=> pour plus de 80 % en poids de particules d'oxyde cristallisées par rapport au poids initial de la poudre complémentaire (à savoir que moins de 20 % de la poudre complémentaire n'a pas produit de particules d'oxyde cristallisées) (selon l'invention) :

- puissance de la torche plasma : entre 20 kW et 40 kW (voire entre 20 kW et 30 kW),
- débit de poudre précurseur : entre 10 g/min et 30 g/min,
- une pression dans l'enceinte réactionnelle de la torche plasma : entre 25 kPa et 100 kPa (de préférence 4 psi et 8 psi, soit entre 27,6 kPa et 55,1 kPa),

et éventuellement au moins l'une des conditions opératoires suivantes :

- débit du gaz de gainage principal : entre 80 L/min (voire 60 L/min) et 100 L/min,
- débit du gaz de gainage complémentaire : entre 10 L/min et 40 L/min.

## 2. Composition et microstructure d'un alliage renforcé de l'invention.

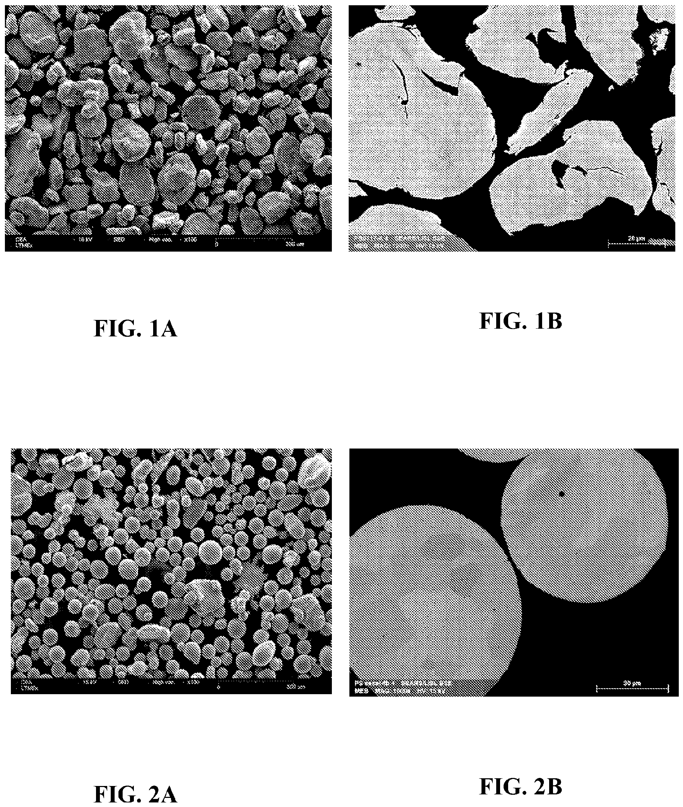

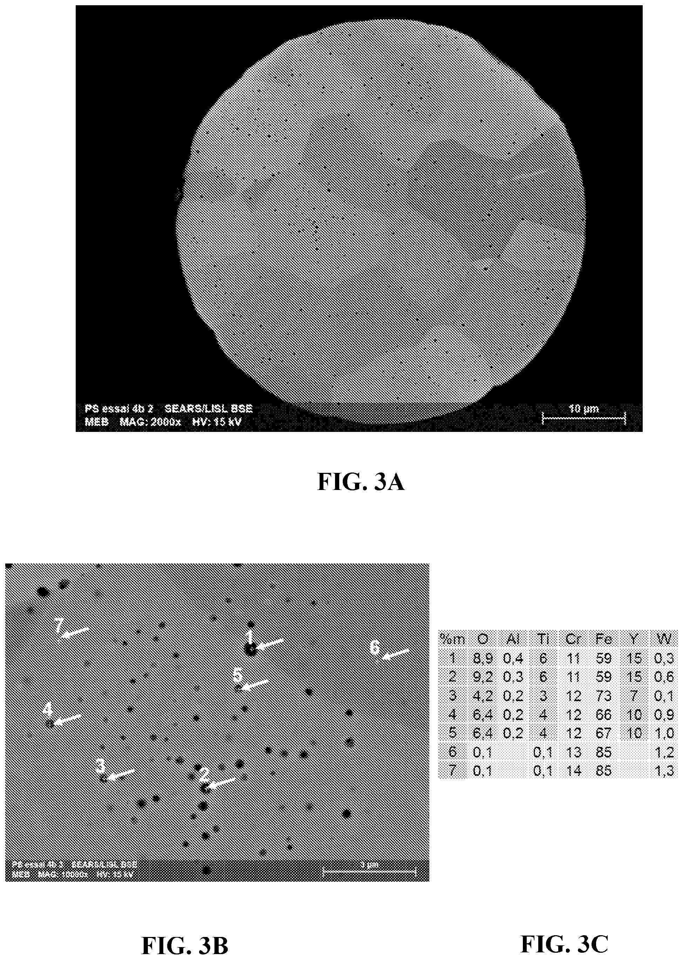

La poudre précurseur et la poudre d'alliage renforcé obtenues respectivement à l'issue de l'étape de mécanosynthèse puis de l'étape de précipitation des oxydes dans la torche plasma selon l'essai n° 4 sont caractérisées par MEB (Figures 1A, 1B, 2A, 2B, 3A et 3B), MET (Figures 4A et 4B) et EDX (tableau de la Figure 3C).

D'après ces analyses, les particules de la poudre précurseur sont de forme variable (Figure 1A) et ont une microstructure chaotique non cristallisée ne contenant aucune particule d'oxyde ayant germé pour constituer un renfort de l'alliage maître (Figure 1B).

En revanche, la combinaison des étapes ii) de broyage et iii) de traitement plasma selon le procédé de fabrication de l'invention permet d'obtenir un alliage renforcé de type ODS dont les particules de poudre sont essentiellement sphériques et/ou sphéroïdales (Figures 2A, 2B et 3A) et constituées de grains composés d'une matrice métallique cristallisée dans laquelle sont incorporés de manière homogène des particules cristallisées d'oxyde apparaissant sous forme de points noirs sur le fond gris de teinte variable constituant la matrice métallique des grains (Figures 2B, 3A et 3B). Les particules cristallisées d'oxyde sont des nanorenforts, leur diamètre médian d50 étant compris entre 150 nm et 200 nm. De nombreux précipités de taille inférieure à 5 nm sont également présents.

Des analyses EDX ont également été réalisées par microscopie électronique MEB et MET. Elles sont regroupées dans le tableau de la Figure 3C qui montre que les nanorenforts présents dans les zones 1 à 5 au sein des particules de la poudre d'alliage ODS sont riches en titane, yttrium et oxygène. A contrario, les analyses EDX correspondantes réalisées dans les zones 6 et 7 de la matrice métallique montrent l'absence d'oxygène, de titane, d'aluminium et d'yttrium dans la matrice (% molaire < à 0,1 % à la marge d'incertitude près, voire nul lorsque qu'aucune valeur n'est indiquée comme pour l'aluminium et l'yttrium). Ces résultats prouvent que tous les atomes de la poudre complémentaire destinés à former les particules d'oxyde dispersées ont bien précipité sous forme de nanorenforts au sein des particules de la poudre d'alliage ODS, comme le montrent également les vues rapprochées des Figures 4A et 4B.

Les Figures 5B, 5C et 5D sont obtenues par diffraction MET de la zone représentée sur la Figure 5A qui est centrée sur un précipité d'oxyde de l'alliage ODS de l'invention. Elles présentent des pics de diffraction de surstructure (à savoir qu'une tache sur deux est plus lumineuse) qui sont caractéristiques d'un oxyde de type pyrochlore $Y_2Ti_2O_7$ classiquement obtenu dans un alliage ODS base fer.

La présente invention n'est nullement limitée aux formes de réalisation décrites et représentées, et l'homme du métier saura les combiner et y apporter avec ses connaissances générales de nombreuses variantes et modifications.

**REFERENCES CITEES**

[1] C. Suryanarayana "Mechanical alloying and milling", Progress in Materials Science 2001, 46, 1-184.

[2] DJ Lloyd ; "Particle reinforced aluminium and magnésium matrix composites" ; International materials reviews, 1994, vol. 39, n° 1, pages 1 à 23.

[3] Fan, X.; Gitzhofer, F.; Boulos, M., "Statistical Design of Experiments for the Spheroidization of Powdered Alumina by Induction Plasma Processing", J Therm Spray Tech 1998, 7 (2), 247-253.

[4] Jiang, X.-L.; Boulos, M., "Induction Plasma Spheroidization of Tungsten and Molybdenum Powders", Transactions of Nonferrous Metals Society of China 2006, 16 (1), 13-17.

[5] Ye, R.; Ishigaki, T.; Jurewicz, J.; Proulx, P.; Boulos, M. I., "In-Flight Spheroidization of Alumina Powders in Ar-H2 and Ar-N2 Induction Plasmas", Plasma Chem Plasma Process 2004, 24 (4), 555-571.

[6] P. Fauchais, "Plasmas thermiques : aspects fondamentaux", Techniques de l'ingénieur, fascicule D2810 V1, 2005).

[7] G. Mollon "Mécanique des matériaux granulaires", INSA de Lyon, 2015 » (en particulier les pages 23 et 24 de la version téléchargée en avril 2018), disponible à l'adresse Internet suivante : "http://guilhem.mollon.free.fr/Telechargements/Mecanique_des _Materiaux_Granulaires.pdf"

[8] F. Laverne et al., "Fabrication additive - Principes généraux", Techniques de l'ingénieur, Fascicule BM7017 V2 (publication du 10 février 2016).

[9] H. Fayazfara et al., "Critical review of powder-based additive manufacturing of ferrous alloys: Process parameters, microstructure and mechanical properties", Materials & Design, Volume 144, 2018, Pages 98-128.

[10] T.DebRoy et al., "Additive manufacturing of metallic components - Process, structure and properties", Progress in Materials Science, Volume 92, 2018, pages 112-224.

[11] Ministère de l'économie et des finances, République Française, "Prospective - futur de la fabrication additive - rapport final", édition de janvier 2017, ISBN : 978-2-11-151552-9.

[12] D. Moinard et al., "Procédés de frittage PIM", Techniques de l'ingénieur, Fascicule M3320 V1 (publication du 10 juin 2011).

[13] A. Papyrin, "Cold Spray Technology", ISBN-13:978-0-08-045155-8, édition 2007.

[14] A. Proner, "Revêtements par projection thermique", Techniques de l'ingénieur, Fascicule M1645 V2 (publication du 10 septembre 1999).

**Revendications**

**1.** Procédé de fabrication d'une poudre d'un alliage renforcé dont les grains formant les particules de la poudre comprennent une matrice métallique dans le volume de laquelle sont dispersées des particules d'oxyde cristallisées, le procédé comprenant les étapes successives suivantes:

i) disposer d'un mélange de poudres à broyer comprenant:

- une poudre mère métallique comprenant un alliage maître destiné à former la matrice métallique, l'alliage maître étant choisi parmi un alliage de base fer, un alliage de base nickel ou un alliage de base aluminium ;
- une poudre complémentaire comprenant au moins un composé intermédiaire destiné à incorporer dans la matrice métallique des atomes destinés à former les particules d'oxyde dispersées; le composé intermédiaire destiné à former les particules d'oxyde dispersées étant choisi parmi $YFe_3$, $Y_2O_3$, $Fe_2O_3$, $Fe_2Ti$, $FeCrWTi$, $TiH_2$, $TiO_2$, $Al_2O_3$, $HfO_2$, $SiO_2$, $ZrO_2$, $ThO_2$, MgO ou leurs mélanges,

ii) broyer le mélange de poudres dans un milieu gazeux de broyage selon un procédé de mécanosynthèse pour fabriquer une poudre précurseur comprenant une matrice métallique incorporant lesdits atomes;

iii) soumettre la poudre précurseur à un plasma thermique généré par une torche plasma comprenant un gaz plasmagène, afin d'obtenir la poudre d'alliage renforcé,

le procédé étant **caractérisé en ce qu'**à l'étape iii), la poudre précurseur est injectée dans la torche plasma selon un débit compris entre 10 grammes/minute et 30 grammes/minute, la puissance de la torche plasma est comprise entre 20 kW et 40 kW, et la pression dans l'enceinte réactionnelle de la torche plasma est comprise entre 25 kPa et 100 kPa.

2. Procédé de fabrication d'une poudre selon la revendication 1, dans lequel l'alliage de base fer comprend en poids 10 % à 30 % de chrome ou l'alliage de base fer comprend en poids 10 % à 30 % d'aluminium, ou l'alliage de base fer comprend en poids 8 % à 25 % de chrome et 3 % à 8 % d'aluminium.

3. Procédé de fabrication d'une poudre selon l'une quelconque des revendications 1 et 2, dans lequel l'alliage de base fer est un acier.

4. Procédé de fabrication d'une poudre selon la revendication 1, dans lequel l'alliage de base nickel comprend en poids 10 % à 40 % de chrome, notamment l'alliage de base nickel comprend en poids 10 % à 40 % de chrome, 0,2 % à 5 % d'aluminium, 0,3 % à 5 % de titane, 0 % à 5 % de tungstène, 0 % à 2 % de molybdène et 0 % à 2 % de tantale, ou l'alliage de base nickel comprend en poids 10 % à 30 % d'aluminium.

5. Procédé de fabrication d'une poudre selon l'une quelconque des revendications précédentes, dans lequel, lorsque l'alliage maître est un alliage de base fer ou un alliage de base nickel, le mélange de poudres comprend en poids 0,1 % à 2,5 % de la poudre complémentaire.

6. Procédé de fabrication d'une poudre selon la revendication 1, dans lequel l'alliage de base aluminium comprend en poids de 0 % à 0,5 % de fer, de 0 % à 0,3 % de silicium et de 0 % à 1 % de magnésium et/ou lorsque l'alliage maître est un alliage de base aluminium, le mélange de poudres comprend en poids 0,2 % à 5 % de la poudre complémentaire.

7. Procédé de fabrication d'une poudre selon l'une quelconque des revendications 1 à 5, dans lequel le mélange de poudres comprend en poids 0,1 % à 0,3 % de la poudre complémentaire.

8. Procédé de fabrication d'une poudre selon l'une quelconque des revendications précédentes, dans lequel lesdits atomes destinés à former les particules d'oxyde dispersées comprennent au moins un atome métallique choisi parmi l'yttrium, le titane, le fer, le chrome, le tungstène, le silicium, le zirconium, le thorium, le magnésium, l'aluminium ou l'hafnium.

9. Procédé de fabrication d'une poudre selon l'une quelconque des revendications précédentes, dans lequel la torche plasma est une torche plasma radiofréquence à couplage inductif, une torche à arc soufflé ou une torche à arc transféré et/ou le gaz plasmagène est choisi parmi l'argon, l'hélium, l'azote ou leurs mélanges et/ou le gaz plasmagène est injecté dans la torche plasma selon un débit compris entre 10 litres/minutes et 40 litres/minutes.

10. Poudre d'alliage renforcé dont les grains formant les particules de la poudre comprennent une matrice métallique,

la matrice métallique, de préférence étant cristallisée, étant composée d'un alliage de base fer, un alliage de base nickel ou un alliage de base aluminium, dans le volume de laquelle sont dispersées des particules d'oxyde cristallisées comprenant au moins un oxyde choisi parmi $Y_2O_3$, $TiO_2$, $Al_2O_3$, $HfO_2$, $SiO_2$, $ZrO_2$, $ThO_2$, $MgOAl_2O_3$,

$Y_2Ti_2O_7$, $Y_2TiO_5$,

l'alliage renforcé contenant un atome métallique choisi parmi l'yttrium, le titane, le silicium, le zirconium, le thorium, le magnésium, l'aluminium ou l'hafnium,

les particules de l'alliage renforcé ayant un coefficient de circularité moyen mesuré conformément à la norme ISO-9276-6 édition 2008 qui est compris entre 0,95 et 1,

la poudre étant **caractérisée en ce que** les particules d'oxyde cristallisées comprennent en poids 80 % à 100 % dudit atome métallique contenu dans l'ensemble de l'alliage renforcé.

11. Poudre d'alliage renforcé selon la revendication 10, dans lequel les particules d'oxyde sont réparties de manière homogène dans le volume de la matrice métallique.

12. Poudre d'alliage renforcé selon l'une quelconque des revendications 10 et 11, dans lequel l'alliage de base fer comprend en poids 10 % à 30 % de chrome ou l'alliage de base fer comprend en poids 10 % à 30 % d'aluminium ou l'alliage de base fer comprend en poids 8 % à 25 % de chrome et 3 % à 8 % d'aluminium.

13. Poudre d'alliage renforcé selon l'une quelconque des revendications 10 à 12, dans lequel l'alliage de base fer est un acier.

14. Poudre d'alliage renforcé selon l'une quelconque des revendications 10 et 11, dans lequel l'alliage de base nickel comprend en poids 10 % à 40 % de chrome, notamment l'alliage de base nickel comprend en poids 10 % à 40 % de chrome, 0,2 % à 5 % d'aluminium, 0,3 % à 5 % de titane, 0 % à 5 % de tungstène, 0 % à 2 % de molybdène et 0 % à 2 % de tantale et/ou dans lequel l'alliage de base nickel comprend en poids 10 % à 30 % d'aluminium.

15. Poudre d'alliage renforcé selon l'une quelconque des revendications 12 à 14, dans lequel, lorsque la matrice métallique est composée d'un alliage de base fer ou d'un alliage de base nickel, l'alliage renforcé comprend en poids 0,1 % à 2,5 % des particules d'oxyde.

16. Poudre d'alliage renforcé selon l'une quelconque des revendications 10 et 11, dans lequel l'alliage de base aluminium comprend en poids de 0 % à 0,5 % de fer, de 0 % à 0,3 % de silicium et de 0 % à 1 % de magnésium et/ou lorsque la matrice métallique est composée d'un alliage de base aluminium, l'alliage renforcé comprend en poids 0,2 % à 5 % des particules d'oxyde.

17. Poudre d'alliage renforcé selon l'une quelconque des revendications 10 à 16, dans lequel l'alliage renforcé comprend en poids 0,1 % à 0,5 % des particules d'oxyde.

18. Poudre d'alliage renforcé selon l'une quelconque des revendications 11 à 17, dans lequel l'alliage renforcé comprend en outre en poids au moins un des éléments suivants :

   - de 10 à 5000 ppm de silicium;
   - de 10 à 100 ppm de soufre ;
   - moins de 20 ppm de chlore;
   - de 2 à 10 ppm de phosphore;
   - de 0,1 à 10 ppm de bore;
   - de 0,1 à 10 ppm de calcium;
   - moins de 0,1 ppm de chacun des éléments suivants : lithium, fluor, métaux lourds, Sn, As, Sb.

19. Poudre d'alliage renforcé selon l'une quelconque des revendications 11 à 18, dans lequel la matrice métallique comprend sous forme dissoute 0 % à 20 % en poids dudit atome métallique par rapport au poids total dudit atome métallique contenu dans l'ensemble de l'alliage renforcé.

20. Utilisation d'une poudre d'alliage renforcé telle que définie selon l'une quelconque des revendications 10 à 19, dans laquelle la poudre d'alliage renforcé est soumise à un procédé de densification de la poudre d'alliage renforcé afin de fabriquer un matériau massif ou à un procédé de revêtement afin de revêtir un support avec la poudre d'alliage renforcé,

   le procédé de densification étant de préférence un procédé de fabrication additive ou un procédé de moulage par injection de poudre, le procédé de fabrication additive étant de préférence choisi parmi un procédé de fusion sélective par laser, de fusion sélective par faisceau d'électrons, de frittage sélectif par laser, de projection laser ou de projection de liant,

le procédé de revêtement est de préférence choisi parmi un procédé de projection à froid ou un procédé de projection thermique de préférence choisi parmi un procédé de projection thermique flamme, un procédé de projection arc électrique entre deux fils ou un procédé de projection plasma soufflé.

## Patentansprüche

1. Verfahren zur Herstellung eines Pulvers einer verstärkten Legierung, deren die Partikel des Pulvers bildende Körner eine metallische Matrix umfassen, in deren Volumen kristallisierte Oxidpartikel dispergiert sind, wobei das Verfahren die folgenden aufeinanderfolgenden Schritte umfasst:

   i) Bereitstellen eines zu mahlenden Pulvergemisches, umfassend:

   - ein metallisches Ausgangspulver, das eine Vorlegierung umfasst, die dazu bestimmt ist, die metallische Matrix zu bilden, wobei die Vorlegierung unter einer Eisenbasislegierung, einer Nickelbasislegierung oder einer Aluminiumbasislegierung gewählt ist;
   - ein komplementäres Pulver, das mindestens eine intermediäre Verbindung umfasst, die dazu bestimmt ist, in die metallische Matrix Atome einzubauen, die dazu bestimmt sind, die dispergierten Oxidpartikel zu bilden; wobei die intermediäre Verbindung, die dazu bestimmt ist, die dispergierten Oxidpartikel zu bilden, unter $YFe_3$, $Y_2O_3$, $Fe_2O_3$, $Fe_2Ti$, $FeCrWTi$, $TiH_2$, $TiO_2$, $Al_2O_3$, $HfO_2$, $SiO_2$, $ZrO_2$, $ThO_2$, MgO oder ihren Gemischen gewählt ist,

   ii) Mahlen des Pulvergemisches in einem gasförmigen Mahlmedium nach einem Mechanosyntheseverfahren, um ein Vorläuferpulver herzustellen, das eine metallische Matrix umfasst, in welche die Atome eingebaut sind;
   iii) Unterziehen des Vorläuferpulvers einem mit einem Plasmabrenner erzeugten thermischen Plasma, das ein plasmagenes Gas umfasst, um das Pulver aus verstärkter Legierung zu erhalten,

   wobei das Verfahren **dadurch gekennzeichnet ist, dass** im Schritt iii) das Vorläuferpulver in den Plasmabrenner mit einem Massenstrom zwischen 10 Gramm/Minute und 30 Gramm/Minute eingeleitet wird, die Leistung des Plasmabrenners zwischen 20 kW und 40 kW beträgt und der Druck in der Reaktionskammer des Plasmabrenners zwischen 25 kPa und 100 kPa beträgt.

2. Verfahren zur Herstellung eines Pulvers nach Anspruch 1, bei dem die Eisenbasislegierung 10 bis 30 Gew.-% Chrom umfasst oder die Eisenbasislegierung 10 bis 30 Gew.-% Aluminium umfasst oder die Eisenbasislegierung 8 bis 25 Gew.-% Chrom und 3 bis 8 Gew.-% Aluminium umfasst.

3. Verfahren zur Herstellung eines Pulvers nach einem der Ansprüche 1 und 2, bei dem die Eisenbasislegierung ein Stahl ist.

4. Verfahren zur Herstellung eines Pulvers nach Anspruch 1, bei dem die Nickelbasislegierung 10 bis 40 Gew.-% Chrom umfasst, die Nickelbasislegierung insbesondere 10 bis 40 Gew.-% Chrom, 0,2 bis 5 Gew.-% Aluminium, 0,3 bis 5 Gew.-% Titan, 0 bis 5 Gew.-% Wolfram, 0 bis 2 Gew.-% Molybdän und 0 bis 2 Gew.-% Tantal umfasst oder die Nickelbasislegierung 10 bis 30 Gew.-% Aluminium umfasst.

5. Verfahren zur Herstellung eines Pulvers nach einem der vorhergehenden Ansprüche, bei dem, wenn die Vorlegierung eine Eisenbasislegierung oder eine Nickelbasislegierung ist, das Pulvergemisch 0,1 bis 2,5 Gew.-% des komplementären Pulvers umfasst.

6. Verfahren zur Herstellung eines Pulvers nach Anspruch 1, bei dem die Aluminiumbasislegierung 0 bis 0,5 Gew.-% Eisen, 0 bis 0,3 Gew.-% Silicium und 0 bis 1 Gew.-% Magnesium umfasst und/oder, wenn die Vorlegierung eine Aluminiumbasislegierung ist, das Pulvergemisch 0,2 bis 5 Gew.-% des komplementären Pulvers umfasst.

7. Verfahren zur Herstellung eines Pulvers nach einem der Ansprüche 1 bis 5, bei dem das Pulvergemisch 0,1 bis 0,3 Gew.-% des komplementären Pulvers umfasst.

8. Verfahren zur Herstellung eines Pulvers nach einem der vorhergehenden Ansprüche, bei dem die Atome, die dazu bestimmt sind, die dispergierten Oxidpartikel zu bilden, mindestens ein metallisches Atom umfassen, das unter Yttrium, Titane, Eisen, Chrom, Wolfram, Silicium, Zirconium, Thorium, Magnesium, Aluminium oder Hafnium gewählt ist.

9. Verfahren zur Herstellung eines Pulvers nach einem der vorhergehenden Ansprüche, bei dem der Plasmabrenner ein induktiv gekoppelter Hochfrequenzplasmabrenner, ein Brenner mit nicht übertragenem Lichtbogen oder ein Brenner mit übertragenem Lichtbogen ist und/oder das plasmagene Gas unter Argon, Helium, Stickstoff und ihren Gemischen gewählt und/oder das plasmagene Gas in den Plasmabrenner mit einem Volumenstrom zwischen 10 Litern/Minute und 40 Litern/Minute eingeleitet wird.

10. Pulver aus verstärkter Legierung, deren die Partikel des Pulvers bildende Körner eine metallische Matrix umfassen,

wobei die metallische Matrix, die bevorzugt kristallisiert ist, aus einer Eisenbasislegierung, einer Nickelbasislegierung oder einer Aluminiumbasislegierung besteht, in deren Volumen kristallisierte Oxidpartikel dispergiert sind, die mindestens ein unter $Y_2O_3$, $TiO_2$, $Al_2O_3$, $HfO_2$, $SiO_2$, $ZrO_2$, $ThO_2$, $MgOAl_2O_3$, $Y_2Ti_2O_7$, $Y_2TiO_5$ gewähltes Oxid umfassen,
wobei die verstärkte Legierung ein metallisches Atom enthält, das unter Yttrium, Titan, Silicium, Zirconium, Thorium, Magnesium, Aluminium oder Hafnium gewählt ist, wobei die Partikel einen gemäß der Norm ISO 9276-6 Ausgabe 2008 gemessenen mittleren Zirkularitätskoeffizienten zwischen 0,95 und 1 besitzen, wobei das Pulver **dadurch gekennzeichnet ist, dass** die kristallisierten Oxidpartikel 80 bis 100 Gew.-% des metallischen Atoms umfassen, das in der gesamten verstärkten Legierung enthalten ist.

11. Pulver aus verstärkter Legierung nach Anspruch 10, bei dem die Oxidpartikel in dem Volumen der metallischen Matrix homogen verteilt sind.

12. Pulver aus verstärkter Legierung nach einem der Ansprüche 10 und 11, bei dem die Eisenbasislegierung 10 bis 30 Gew.-% Chrom umfasst oder die Eisenbasislegierung 10 bis 30 Gew.-% Aluminium umfasst oder die Eisenbasislegierung 8 bis 25 Gew.-% Chrom und 3 bis 8 Gew.-% Aluminium umfasst.

13. Pulver aus verstärkter Legierung nach einem der Ansprüche 10 bis 12, bei dem die Eisenbasislegierung ein Stahl ist.

14. Pulver aus verstärkter Legierung nach einem der Ansprüche 10 und 11, bei dem die Nickelbasislegierung 10 bis 40 Gew.-% Chrom umfasst, die Nickelbasislegierung insbesondere 10 bis 40 Gew.-% Chrom, 0,2 bis 5 Gew.-% Aluminium, 0,3 bis 5 Gew.-% Titan, 0 bis 5 Gew.-% Wolfram, 0 bis 2 Gew.-% Molybdän und 0 bis 2 Gew.-% Tantal umfasst und/oder bei dem oder die Nickellegierung 10 bis 30 Gew.-% Aluminium umfasst.

15. Pulver aus verstärkter Legierung nach einem der Ansprüche 12 bis 14, bei dem, wenn die metallische Matrix aus einer Eisenbasislegierung oder einer Nickelbasislegierung besteht, die verstärkte Legierung 0,1 bis 2,5 Gew.-% der Oxidpartikel umfasst.

16. Pulver aus verstärkter Legierung nach einem der Ansprüche 10 und 11, bei dem die Aluminiumbasislegierung 0 bis 0,5 Gew.-% Eisen, 0 bis 0,3 Gew.-% Silicium und 0 bis 1 Gew.-% Magnesium umfasst und/oder, wenn die metallische Matrix aus einer Aluminiumbasislegierung besteht, die verstärkte Legierung 0,2 bis 5 Gew.-% der Oxidpartikel umfasst.

17. Pulver aus verstärkter Legierung nach einem der Ansprüche 10 bis 16, bei dem die verstärkte Legierung 0,1 bis 0,5 Gew.-% der Oxidpartikel umfasst.

18. Pulver aus verstärkter Legierung nach einem der Ansprüche 11 bis 17, bei dem die verstärkte Legierung ferner bezogen auf das Gewicht mindestens eines der folgenden Elemente umfasst:

- 10 bis 5000 ppm Silicium;
- 10 bis 100 ppm Schwefel;
- weniger als 20 ppm Chlor;
- 2 bis 10 ppm Phosphor;
- 0,1 bis 10 ppm Bor;
- 0,1 bis 10 ppm Calcium;
- weniger als 0,1 ppm jedes der folgenden Elemente: Lithium, Fluor, Schwermetalle, Sn, As, Sb.

**19.** Pulver aus verstärkter Legierung nach einem der Ansprüche 11 bis 18, bei dem die metallische Matrix in gelöster Form 0 bis 20 Gew.-% des metallischen Atoms bezogen auf das Gesamtgewicht des in der gesamten verstärkten Legierung enthaltenen metallischen Atoms umfasst.

**20.** Verwendung eines Pulvers aus verstärkter Legierung wie nach einem der Ansprüche 10 bis 19 definiert, bei der das Pulver aus verstärkter Legierung einem Verfahren zur Verdichtung des Pulvers aus verstärkter Legierung unterzogen wird, um ein massives Material herzustellen, oder einem Beschichtungsverfahren, um einen Träger mit dem Pulver aus verstärkter Legierung zu beschichten,

wobei das Verdichtungsverfahren bevorzugt ein Verfahren zur additiven Fertigung oder ein Pulverspritzgussverfahren ist, wobei das Verfahren zur additiven Fertigung bevorzugt unter einem selektiven Laserschmelzen, einem selektiven Elektronenstrahlschmelzen, einem selektiven Lasersintern, einem Laserauftragschweißen oder einem Freistrahl-Bindemittelauftrag gewählt ist,
wobei das Beschichtungsverfahren bevorzugt unter einem Kaltgasspritzen oder einem thermischen Spritzen gewählt ist, das bevorzugt unter einem Flammspritzen, einem Drahtlichtbogenspritzen oder einem Plasmaspritzen gewählt ist.

**Claims**

**1.** Process for the manufacture of a powder of a reinforced alloy for which the grains forming the particles of the powder comprise a metal matrix in the volume of which crystalline oxide particles are dispersed, the process comprising the following successive stages:

i) having available a mixture of powders to be ground comprising:

- a parent metal powder comprising a master alloy intended to form the metal matrix, the master alloy being chosen from an iron-based alloy, a nickel-based alloy or an aluminium-based alloy;
- an additional powder comprising at least one intermediate compound intended to incorporate, in the metal matrix, atoms intended to form the dispersed oxide particles; the intermediate compound intended to form the dispersed oxide particles being chosen from $YFe_3$, $Y_2O_3$, $Fe_2O_3$, $Fe_2Ti$, $FeCrWTi$, $TiH_2$, $TiO_2$, $Al_2O_3$, $HfO_2$, $SiO_2$, $ZrO_2$, $ThO_2$, $MgO$ or their mixtures;

ii) grinding the mixture of powders in a gaseous grinding medium according to a mechanical synthesis process in order to manufacture a precursor powder comprising a metal matrix incorporating said atoms;
iii) subjecting the precursor powder to a thermal plasma generated by a plasma torch comprising a plasma gas, in order to obtain the reinforced alloy powder;

the process being **characterized in that**, in stage iii), the precursor powder is injected into the plasma torch at a flow rate of between 10 grams/minute and 30 grams/minute, the power of the plasma torch is of between 20 kW and 40 kW and the pressure in the reaction chamber of the plasma torch is of between 25 kPa and 100 kPa.

**2.** Process for the manufacture of a powder according to Claim 1, in which the iron-based alloy comprises, by weight, from 10% to 30% of chromium, or the iron-based alloy comprises, by weight, from 10% to 30% of aluminium, or the iron-based alloy comprises, by weight, from 8% to 25% of chromium and from 3% to 8% of aluminium.

**3.** Process for the manufacture of a powder according to either one of Claims 1 and 2, in which the iron-based alloy is a steel.

**4.** Process for the manufacture of a powder according to Claim 1, in which the nickel-based alloy comprises, by weight, from 10% to 40% of chromium, in particular the nickel-based alloy comprises, by weight, from 10% to 40% of chromium, from 0.2% to 5% of aluminium, from 0.3% to 5% of titanium, from 0% to 5% of tungsten, from 0% to 2% of molybdenum and from 0% to 2% of tantalum, or the nickel-based alloy comprises, by weight, from 10% to 30% of aluminium.

**5.** Process for the manufacture of a powder according to any one of the preceding claims, in which, when the master alloy is an iron-based alloy or a nickel-based alloy, the mixture of powders comprises, by weight, from 0.1% to 2.5% of the additional powder.

6. Process for the manufacture of a powder according to Claim 1, in which the aluminium-based alloy comprises, by weight, from 0% to 0.5% of iron, from 0% to 0.3% of silicon and from 0% to 1% of magnesium and/or, when the master alloy is an aluminium-based alloy, the mixture of powders comprises, by weight, from 0.2% to 5% of the additional powder.

7. Process for the manufacture of a powder according to any one of Claims 1 to 5, in which the mixture of powders comprises, by weight, from 0.1% to 0.3% of the additional powder.

8. Process for the manufacture of a powder according to any one of the preceding claims, in which said atoms intended to form the dispersed oxide particles comprise at least one metal atom chosen from yttrium, titanium, iron, chromium, tungsten, silicon, zirconium, thorium, magnesium, aluminium or hafnium.

9. Process for the manufacture of a powder according to any one of the preceding claims, in which the plasma torch is an inductively coupled radiofrequency plasma torch, a blown arc torch or a transferred arc torch and/or the plasma gas is chosen from argon, helium, nitrogen or their mixtures and/or the plasma gas is injected into the plasma torch at a flow rate of between 10 litres/minute and 40 litres/minute.

10. Reinforced alloy powder for which the grains forming the particles of the powder comprise a metal matrix,

   the metal matrix, which is preferably crystalline, being composed of an iron-based alloy, a nickel-based alloy or an aluminium-based alloy, in the volume of which are dispersed crystalline oxide particles comprising at least one oxide chosen from $Y_2O_3$, $TiO_2$, $Al_2O_3$, $HfO_2$, $SiO_2$, $ZrO_2$, $ThO_2$, $MgOAl_2O_3$, $Y_2TiO_7$, $Y_2TiO_5$,
   the reinforced alloy containing a metal atom chosen from yttrium, titanium, silicon, zirconium, thorium, magnesium, aluminium or hafnium,
   the particles of the reinforced alloy having an average circularity coefficient, measured in accordance with Standard ISO-9276-6, 2008 edition, which is of between 0.95 and 1,
   the powder being **characterized in that** the crystalline oxide particles comprise, by weight, from 80% to 100% of said metal atom contained in the whole of the reinforced alloy.

11. Reinforced alloy powder according to Claim 10, in which the oxide particles are distributed uniformly in the volume of the metal matrix.

12. Reinforced alloy powder according to either one of Claims 10 and 11, in which the iron-based alloy comprises, by weight, from 10% to 30% of chromium or the iron-based alloy comprises, by weight, from 10% to 30% of aluminium or the iron-based alloy comprises, by weight, from 8% to 25% of chromium and from 3% to 8% of aluminium.

13. Reinforced alloy powder according to any one of Claims 10 to 12, in which the iron-based alloy is a steel.

14. Reinforced alloy powder according to either one of Claims 10 and 11, in which the nickel-based alloy comprises, by weight, from 10% to 40% of chromium, in particular the nickel-based alloy comprises, by weight, from 10% to 40% of chromium, from 0.2% to 5% of aluminium, from 0.3% to 5% of titanium, from 0% to 5% of tungsten, from 0% to 2% of molybdenum and from 0% to 2% of tantalum and/or in which the nickel-based alloy comprises, by weight, from 10% to 30% of aluminium.

15. Reinforced alloy powder according to any one of Claims 12 to 14, in which, when the metal matrix is composed of an iron-based alloy or of a nickel-based alloy, the reinforced alloy comprises, by weight, from 0.1% to 2.5% of the oxide particles.

16. Reinforced alloy powder according either one of Claims 10 and 11, in which the aluminium-based alloy comprises, by weight, from 0% to 0.5% of iron, from 0% to 0.3% of silicon and from 0% to 1% of magnesium and/or, when the metal matrix is composed of an aluminium-based alloy, the reinforced alloy comprises, by weight, from 0.2% to 5% of the oxide particles.

17. Reinforced alloy powder according to any one of Claims 10 to 16, in which the reinforced alloy comprises, by weight, from 0.1% to 0.5% of the oxide particles.

18. Reinforced alloy powder according to any one of Claims 11 to 17, in which the reinforced alloy additionally comprises, by weight, at least one of the following elements:

- from 10 to 5000 ppm of silicon;
- from 10 to 100 ppm of sulfur;
- less than 20 ppm of chlorine;
- from 2 to 10 ppm of phosphorus;
- from 0.1 to 10 ppm or boron;
- from 0.1 to 10 ppm of calcium;
- less than 0.1 ppm of each of the following elements: lithium, fluorine, heavy metals, Sn, As or Sb.

19. Reinforced alloy powder according to any one of Claims 11 to 18, in which the metal matrix comprises, in dissolved form, from 0% to 20% by weight of said metal atom, with respect to the total weight of said metal atom contained in the whole of the reinforced alloy.

20. Use of a reinforced alloy powder as defined according to any one of Claims 10 to 19, in which the reinforced alloy powder is subjected to a process of densification of the reinforced alloy powder in order to manufacture a bulk material or to a coating process in order to coat a support with the reinforced alloy powder, the densification process preferably being an additive manufacturing process or a powder injection moulding process, the additive manufacturing process preferably being chosen from a selective laser melting, selective electron beam melting, selective laser sintering, laser cladding or binder jetting process,
the coating process preferably being chosen from a cold spraying process or a thermal spraying process preferably chosen from a flame thermal spraying process, a twin wire electric arc spraying process or a blown arc plasma spraying process.

**FIG. 1A**

**FIG. 1B**

**FIG. 2A**

**FIG. 2B**

**FIG. 3A**

| %m | O | Al | Ti | Cr | Fe | Y | W |
|---|---|---|---|---|---|---|---|
| 1 | 8,9 | 0,4 | 6 | 11 | 59 | 15 | 0,3 |
| 2 | 9,2 | 0,3 | 6 | 11 | 59 | 15 | 0,6 |
| 3 | 4,2 | 0,2 | 3 | 12 | 73 | 7 | 0,1 |
| 4 | 6,4 | 0,2 | 4 | 12 | 66 | 10 | 0,9 |
| 5 | 6,4 | 0,2 | 4 | 12 | 67 | 10 | 1,0 |
| 6 | 0,1 | | 0,1 | 13 | 85 | | 1,2 |
| 7 | 0,1 | | 0,1 | 14 | 85 | | 1,3 |

**FIG. 3B**                    **FIG. 3C**

FIG. 4A                                    FIG. 4B

FIG. 5A              FIG. 5B              FIG. 5C              FIG. 5D

**FIG. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 102251131 A

**Littérature non-brevet citée dans la description**

- **C. SURYANARAYANA.** Mechanical alloying and milling. *Progress in Materials Science,* 2001, vol. 46, 1-184
- **PEI HE et al.** An in situ SANS study of nanoparticles formation in 9Cr ODS steel powders. *Materials Letters,* 2017, vol. 209, 535-538
- **DJ LLOYD.** Particle reinforced aluminium and magnesium matrix composites. *International materials reviews,* 1994, vol. 39 (1), 1-23
- **FAN, X. ; GITZHOFER, F ; BOULOS, M.** Statistical Design of Experiments for the Spheroidization of Powdered Alumina by Induction Plasma Processing. *J Therm Spray Tech,* 1998, vol. 7 (2), 247-253
- **JIANG, X.-L ; BOULOS, M.** Induction Plasma Spheroidization of Tungsten and Molybdenum Powders. *Transactions of Nonferrous Metals Society of China,* 2006, vol. 16 (1), 13-17
- **YE, R. ; ISHIGAKI, T ; JUREWICZ, J. ; PROULX, P ; BOULOS, M. I.** In-Flight Spheroidization of Alumina Powders in Ar-H2 and Ar-N2 Induction Plasmas. *Plasma Chem Plasma Process,* 2004, vol. 24 (4), 555-571
- **P. FAUCHAIS.** Plasmas thermiques : aspects fondamentaux. *Techniques de l'ingénieur, fascicule D2810 V1,* 2005
- **G. MOLLON.** Mécanique des matériaux granulaires. *INSA de Lyon,* 2015, 23-24
- **F. LAVERNE et al.** Fabrication additive - Principes généraux. *Techniques de l'ingénieur, Fascicule BM7017 V2,* 10 Février 2016
- **H. FAYAZFARA et al.** critical review of powder-based additive manufacturing of ferrous alloys: Process parameters, microstructure and mechanical properties. *Materials & Design,* 2018, vol. 144, 98-128
- **T.DEBROY et al.** Additive manufacturing of metallic components - Process, structure and properties. *Progress in Materials Science,* 2018, vol. 92, 112-224
- Prospective - futur de la fabrication additive - rapport final. Ministère de l'économie et des finances, Janvier 2017, 205-220

- **D. MOINARD et al.** Procédés de frittage PIM. *Techniques de l'ingénieur, Fascicule M3320 V1,* 10 Juin 2011
- **A. PAPYRIN.** Cold Spray Technology. 2007
- **A. PRONER.** Revêtements par projection thermique. *Techniques de l'ingénieur, Fascicule M1645 V2,* 10 Septembre 1999
- **KIM, K. S. ; MORADIAN, A. ; MOSTAGHIMI, J.** Soucy, G. Modeling of Induction Plasma Process for Fullerene Synthesis : Effect of Plasma Gas Composition and Operating Pressure. *Plasma Chemistry and Plasma Processing,* 2010, vol. 30, 91-110
- **DJ LLOYD.** Particle reinforced aluminium and magnésium matrix composites. *International materials reviews,* 1994, vol. 39 (1), 1-23
- **FAN, X ; GITZHOFER, F. ; BOULOS, M.** Statistical Design of Experiments for the Spheroidization of Powdered Alumina by Induction Plasma Processing. *J Therm Spray Tech,* 1998, vol. 7 (2), 247-253
- **JIANG, X.-L. ; BOULOS, M.** Induction Plasma Spheroidization of Tungsten and Molybdenum Powders. *Transactions of Nonferrous Metals Society of China,* 2006, vol. 16 (1), 13-17
- **YE, R. ; ISHIGAKI, T ; JUREWICZ, J. ; PROULX, P. ; BOULOS, M. I.** In-Flight Spheroidization of Alumina Powders in Ar-H2 and Ar-N2 Induction Plasmas. *Plasma Chem Plasma Process,* 2004, vol. 24 (4), 555-571
- **G. MOLLON.** Mécanique des matériaux granulaires. *INSA de Lyon,* 2015, 23-24, http://guilhem.mollon.free.fr/Telechargements/Mecanique_des _Materiaux_Granulaires.pdf
- **H. FAYAZFARA et al.** Critical review of powder-based additive manufacturing of ferrous alloys: Process parameters, microstructure and mechanical properties. *Materials & Design,* 2018, vol. 144, 98-128
- Prospective - futur de la fabrication additive - rapport final. Ministère de l'économie et des finances, Janvier 2017